(19) Europäisches Patentamt
European Patent Office
Office européen des brevets

(11) **EP 3 571 487 B1**

(12) **EUROPÄISCHE PATENTSCHRIFT**

(45) Veröffentlichungstag und Bekanntmachung des Hinweises auf die Patenterteilung:
**03.03.2021 Patentblatt 2021/09**

(21) Anmeldenummer: **18701697.7**

(22) Anmeldetag: **18.01.2018**

(51) Int Cl.:
*G01M 13/028* (2019.01)    *G01M 13/045* (2019.01)

(86) Internationale Anmeldenummer:
**PCT/EP2018/051187**

(87) Internationale Veröffentlichungsnummer:
**WO 2018/134295 (26.07.2018 Gazette 2018/30)**

(54) **VORRICHTUNG ZUR ANALYSE ODER ÜBERWACHUNG EINES ROTIERENDEN ELEMENTS UND ENTSPRECHENDES VERFAHREN**

DEVICE AND METHOD FOR THE MONITORING OF A ROTATING ELEMENT

DISPOSITIF ET PROCÉDÉ POUR LA SURVEILLANCE D'UN ÉLÉMENT TOURNANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.01.2017 DE 102017200761**

(43) Veröffentlichungstag der Anmeldung:
**27.11.2019 Patentblatt 2019/48**

(73) Patentinhaber:
• **Fraunhofer-Gesellschaft zur Förderung der angewandten Forschung e.V.
80686 München (DE)**
• **Technische Universität Ilmenau
98693 Ilmenau (DE)**

(72) Erfinder: **HUSAR, Peter
98693 Ilmenau (DE)**

(74) Vertreter: **Zinkler, Franz
Schoppe, Zimmermann, Stöckeler
Zinkler, Schenk & Partner mbB
Patentanwälte
Radlkoferstrasse 2
81373 München (DE)**

(56) Entgegenhaltungen:
**CN-A- 105 806 613    CN-A- 106 289 774**

**Beschreibung**

Die Erfindung bezieht sich auf eine Vorrichtung zur Analyse oder Überwachung eines rotierenden Elements. Weiterhin bezieht sich die Erfindung auf ein Verfahren zur Analyse oder zum Überwachen eines rotierenden Elements.

Im Stand der Technik basieren die Diagnostik für die Zustandsüberwachung von Maschinen oder Bauteilen und die Detektion von Defekten auf der Erfassung von Körperschall und seiner Auswertung (siehe beispielsweise die EP 2 730 906 A2 oder die DE 199 54 066 C1). Die Vibrationen werden meistens mittels elektromechanischer Wandler direkt von der Oberfläche der Maschine aufgenommen. Teilweise werden auch Laser zur kontaktfreien Erfassung des Körperschalls verwendet (Lasermikrofon).

Ein wichtiges diagnostisches Mittel bei der Auswertung der Messsignale ist das sog. Ordnungsspektrum, welches eine Variante des konventionellen Frequenzspektrums ist und zur Skalierung die Drehzahl verwendet wird. Dadurch sind Defekte an Hand der auf die aktuelle Drehzahl normierten Frequenz oder Zeit detektierbar und daher von der absoluten Frequenz unabhängig. Für die Berechnung des Ordnungsspektrums wird üblicherweise die Einhüllende der hochfrequenten Schwingungen (sog. "envelope detection") verwendet, welche signaltheoretisch einer Amplitudendemodulation entspricht.

Da ein Amplitudendemodulator aus Sicht der Detektionstheorie ein Energiedetektor ist, wird ein Mindest-SNR (Signal-to-Noise-Ratio, Signal-Rauschen-Verhältnis) von +10 dB benötigt. Selbst bei einem guten SNR oberhalb dieses Werts verursacht der Amplitudendemodulator eine nichtlineare Verzerrung des Spektrums. Dies kann im Ordnungsspektrum zu falschen Detektionen (falsch positive Detektion, falscher Alarm) führen.

In der Realität liegt der SNR bei beginnenden Defekten (z. B. Riss im Wälzlager) bei bis zu -60 dB (also etwa $10^7$ mal schwächer als der für die Hüllkurvendemodulation notwendige Wert), sodass die konventionellen Methoden den Defekt nicht detektieren können. Für die Zustandsüberwachung bzw. für die frühe Defekterkennung ist aber genau dieser Bereich diagnostisch wichtig.

Das Problem eines schwachen Signal-Rauschen-Verhältnisses kann zum Teil durch Integraltransformationen im Frequenzbereich (z. B. Hilbert-, Fourier-, Wavelet-Transformation, direktes Bispektrum/Trispektrum) gelöst werden. Dies funktioniert allerdings nur unter der notwendigen Bedingung einer konstanten Drehzahl über einen Zeitraum von bis zu einer halben Stunde. Diese Bedingung kann in der Praxis nur sehr selten eingehalten werden.

Die CN 105 806 613 A offenbart eine Fehlerdiagnose von Rotationsmaschinen, und betrifft insbesondere ein Fehlerdiagnoseverfahren für Planetengetriebegehäuse auf der Grundlage der Auftragskomplexität und wird speziell auf ein Fehlerdiagnoseverfahren eines Planetengetriebegehäuses mit Windkraft unter variablen Arbeitsbedingungen angewendet. Das Verfahren umfasst die folgenden Schritte: Vorverarbeitung von Vibrationssignalen; Aufteilen von Fehlern eines Planetengetriebes in zwei Arten; Erhalten eines Fehlermerkmalsparameters; Analysieren der Schwingungssignale unter variablen Arbeitsbedingungen eines Planetengetriebegehäuses; und Durchführen einer Instanzüberprüfungserkennung.

Die CN 106 289 774 A offenbart ein Wälzlagerfehleridentifizierungs- und Trendvorhersageverfahren, das zum Bereich der Fehlerdiagnose rotierender Maschinen gehört. Das Verfahren umfasst das Erhalten der Schwingungssignale eines Lagers unter Normal- und Fehlerbedingungen als Originalsignale, das Verwenden der EMD zum Zerlegen der Originalsignale in eine endliche Anzahl von IWF-Komponenten, das Auswählen typischer IWF-Komponenten gemäß einer Korrelationsanalyse und das Summieren der Komponenten, um ein Rekombinationssignal zu erhalten, das Verwenden eines FK-Algorithmus zum Verarbeiten des Rekombinationssignals, das automatische Erhalten einer optimalen Mittenfrequenz und Bandbreite für die Hüllkurvenanalyse, das Extrahieren einer Fehlercharakteristikfrequenz und somit das Realisieren einer Fehlertypidentifikation und das Auswählen des Energieprozentsatzes einer IWF-Komponente mit dem größten Korrelationskoeffizienten mit den ursprünglichen Signalen als Fehlergrad-Bewertungsindex.

Die Aufgabe der Erfindung besteht darin, eine verbesserte Vorrichtung oder ein Verfahren zur Analyse eines rotierenden Elements zu schaffen.

Diese Aufgabe wird durch eine Vorrichtung nach Anspruch 1 oder ein Verfahren nach Anspruch 12 oder ein Computerprogramm nach Anspruch 13 gelöst.

Eine Vorrichtung zur Analyse eines mit einer Drehzahl rotierenden Elements auf der Basis eines Vibrationssignals, das von dem rotierenden Element stammt, umfasst eine Analysefunktionseinrichtung zum Bilden einer Mehrzahl von Analysefunktionen, wobei die Analysefunktionseinrichtung ausgebildet ist, um jede Analysefunktion auf der Basis einer Analysefrequenz, auf der Basis des Vibrationssignals und auf der Basis eines vorgegebenen Ordnungsfaktors zu bilden. Der vorgegebene Ordnungsfaktor ist für jede Analysefunktion unterschiedlich, so dass die einzelnen Analysefunktionen alle voneinander unterschiedlich sind. Ferner umfasst die Vorrichtung eine Korrelationseinrichtung zum Berechnen einer Korrelationsfunktion, wobei die Korrelationseinrichtung ausgebildet ist, um aus dem Vibrationssignal und jeder Analysefunktion jeweils ein Korrelationsergebnis zu berechnen, wobei jedes Korrelationsergebnis dem Ordnungsfaktor zugeordnet ist, auf dem die Analysefunktion basiert, mit der das Korrelationsergebnis berechnet worden ist, und wobei die Korrelationsergebnisse zusammen die Korrelationsfunktion darstellen. Ferner ist eine Untersuchungseinrichtung vorgesehen, um die Korrelationsfunktion oder eine von der Korrelationsfunktion abgeleitete Darstellung zu untersuchen, um eine Aussage über einen Zustand des rotierenden Elements zu treffen.

Bei dem rotierenden Element handelt es sich beispielsweise um eine Maschine oder um ein Bauteil einer Maschine (z. B. ein Kugellager).

Ein Ausführungsbeispiel betrifft auch eine Vorrichtung zur Überwachung eines rotierenden Elements. Dabei weist die Vorrichtung einen Vibrationssensor und eine Auswertevorrichtung auf. Der Vibrationssensor ist derartig ausgestaltet, ausgehend von Vibrationen des rotierenden Elements ein zeitabhängiges Vibrationssignal zu erzeugen. Die Auswertevorrichtung ist derartig ausgestaltet, anhand des Vibrationssignals und anhand einer zeitabhängigen Drehzahl des rotierenden Elements und/oder anhand eines von einer zeitabhängigen Drehzahl des rotierenden Elements abhängigen Werts eine Aussage über einen Zustand des rotierenden Elements zu ermitteln. Die Auswertevorrichtung ist weiterhin derartig ausgestaltet, das Vibrationssignal mit einer von einer vorgebbaren Anfangsfrequenz und von der Drehzahl und/oder von einem von der Drehzahl abhängigen Wert abhängigen harmonischen Analysefunktion unter Einfügung einer vorgebbaren Zeitverschiebung zwischen dem Vibrationssignal und der Analysefunktion zu korrelieren und ausgehend von einer durch eine Kreuzkorrelation erhaltenen Auswertefunktion die Aussage über den Zustand des rotierenden Elements zu ermitteln. Zudem ist die Auswertevorrichtung derartig ausgestaltet, bei der Ermittlung der Aussage über den Zustand des rotierenden Elements Werte der Anfangsfrequenz und/oder der Zeitverschiebung zu variieren.

Die Auswertevorrichtung ist derartig ausgestaltet, anhand des Vibrationssignals und anhand einer zeitabhängigen Drehzahl des rotierenden Elements eine Aussage über einen Zustand des rotierenden Elements zu ermitteln. Alternativ oder ergänzend ist die Auswertevorrichtung derartig ausgestaltet, anhand des Vibrationssignals und anhand eines von einer zeitabhängigen Drehzahl des rotierenden Elements abhängigen Werts eine Aussage über einen Zustand des rotierenden Elements zu ermitteln.

Die Auswertevorrichtung korreliert (vorzugsweise kreuzkorreliert) das Vibrationssignal mit einer harmonischen Analysefunktion, die abhängig ist von einer vorgebbaren Anfangsfrequenz und von der Drehzahl und/oder von einem von der Drehzahl abhängigen Wert. Dabei fügt die Auswertevorrichtung eine vorgebbare Zeitverschiebung zwischen dem Vibrationssignal und der Analysefunktion ein. Ausgehend von einer durch eine Kreuzkorrelation erhaltenen Auswertefunktion ermittelt die Auswertevorrichtung dann die Aussage über den Zustand des rotierenden Elements. Die Werte für die Zeitverschiebung und/oder die Anfangsfrequenz werden dabei von der Auswertevorrichtung durch die Variation vorgegeben.

Der von der zeitabhängigen Drehzahl des rotierenden Elements abhängige Wert ist in einer Ausgestaltung eine zeitabhängige Phase der Rotationen/Drehungen des Elements und ergibt sich als Integralwert der Drehzahl. Der abhängige Wert ist dabei ebenfalls zeitabhängig.

Das zeitabhängige Vibrationssignal sei beispielsweise bezeichnet mit $x(t)$. Die zeitabhängigen Drehzahl des Elements sei beispielsweise bezeichnet mit $z(t)$. Der von der zeitabhängigen Drehzahl abhängige Wert sei beispielsweise bezeichnet mit $r(t)$. Dabei sei die Zeit generell mit $t$ bezeichnet. Die Anfangsfrequenz sei beispielsweise mit dem griechischen Kleinbuchstaben $v$ bezeichnet. Die Zeitverschiebung sei beispielsweise mit dem griechischen Kleinbuchstaben $\tau$ bezeichnet. Die Analysefunktion sei beispielsweise mit $h(t)$ bezeichnet. Die Auswertefunktion sei mit $y(t, \tau, v)$ bezeichnet.

Die Erfindung erlaubt somit allgemein eine körperschall-basierte Detektion von Defekten in rotierenden Teilen, Maschinen oder allgemein Elementen. Dies ist insbesondere auch bei einem geringen Signal zu Rauschen-Verhältnis möglich.

Eine Ausgestaltung besteht darin, dass die Vorrichtung zusätzlich einen Rotationssensor aufweist. Dabei ist der Rotationssensor derartig ausgestaltet, die Drehzahl und/oder den von der Drehzahl abhängigen Wert zu messen. Erfasst somit der Vibrationssensor die Schwingungen des betrachteten Elements, so ermittelt der Rotationssensor die Drehzahl des Elements oder eines von den Drehungen abhängigen Werts.

In einer Ausgestaltung ist vorgesehen, dass die Auswertevorrichtung derartig ausgestaltet ist, anhand einer Zeit-Frequenz-Verteilung des Vibrationssignals die Drehzahl und/oder den von der Drehzahl abhängigen Wert zu ermitteln. In dieser Ausgestaltung wird somit die Drehzahl bzw. ein davon abhängiger Wert nicht gemessen, sondern errechnet.

Eine Ausgestaltung besteht darin, dass die Auswertevorrichtung derartig ausgestaltet ist, eine Abweichung von einem Sollzustand des rotierenden Elements als Aussage über den Zustand des rotierenden Elements zu ermitteln. Der Sollzustand wird beispielweise durch eine Form des Vibrationssignals und ggf. ergänzt durch ein Toleranzband beschrieben.

In einer Ausgestaltung ist vorgesehen, dass die Auswertevorrichtung derartig ausgestaltet ist, die Auswertefunktion durch eine Faltung des Vibrationssignals mit der zeitlich gespiegelten Analysefunktion zu erhalten.

Die folgenden Ausgestaltungen beziehen sich auf die Analysefunktion, die von der Auswertevorrichtung verwendet wird.

Eine Ausgestaltung besteht darin, dass die Auswertevorrichtung derartig ausgestaltet ist, eine Analysefunktion zu verwenden, die zumindest abhängig ist von einer zeitabhängigen Phase der Rotationen als Integralwert der Drehzahl und von der Anfangsfrequenz. Die zeitabhängige Phase der Rotationen ist somit in dieser Ausgestaltung der von der Drehzahl abhängige Wert.

In einer Ausgestaltung ist vorgesehen, dass die Auswertevorrichtung derartig ausgestaltet ist, eine Analysefunktion zu verwenden, die zumindest abhängig ist von einer Exponentialfunktion mit einem Argument, das abhängig ist von einem Produkt aus einer zeitabhängigen Phase der Rotationen als Integralwert der Drehzahl und aus der Anfangsfrequenz.

Eine Ausgestaltung besteht darin, dass die Auswertevorrichtung derartig ausgestaltet ist, eine Analysefunktion zu verwenden, die zumindest abhängig von der folgenden Exponentialfunktion ist: exp(j f s r(t)).

Dabei ist:

- j die imaginäre Einheit,
- j ein vorgebbarer Frequenzwert und
- j s ein vorgebbarer Skalierungsfaktor bzw. Ordnungsfaktor.

Weiterhin ist r(t) eine zeitabhängige Phase der Rotationen als Integralwert der Drehzahl z(t). Schließlich ist die vorgebbare Anfangsfrequenz gleich einem Produkt aus dem vorgebbaren Frequenzwert (bezeichnet mit f) und dem vorgebbaren Skalierungsfaktor bzw. Ordnungsfaktor (bezeichnet mit s).

Die folgenden Ausgestaltungen beziehen sich auf die Auswertung der Auswertefunktion durch die Auswertevorrichtung. Dabei hängt in einer Ausgestaltung die Auswertefunktion von der Zeit, der Anfangsfrequenz und der Zeitverschiebung ab.

In einer Ausgestaltung ist vorgesehen, dass die Auswertevorrichtung derartig ausgestaltet ist, eine maximale Korrelation und/oder eine maximale Signalenergie der Auswertefunktion zu ermitteln.

Eine Ausgestaltung besteht darin, dass die Auswertevorrichtung derartig ausgestaltet ist, die maximale Korrelation und/oder die maximale Signalenergie der Auswertefunktion für mehrere Kombinationen der variierten Werte der Anfangsfrequenz und/oder der Zeitverschiebung zu ermitteln. In dieser Ausgestaltung wird also die Anfangsfrequenz und/oder die Zeitverschiebung variiert und die sich jeweils ergebenden Auswertefunktionen werden in Richtung auf die Aussage über den Zustand des Elements ausgewertet.

In einer Ausgestaltung ist vorgesehen, dass die Auswertevorrichtung derartig ausgestaltet ist, aus einer Auswertung der Auswertefunktion ein Ordnungsspektrum zu erzeugen und/oder eine Ordnung von Defekten des rotierenden Elements zu identifizieren.

Eine Ausgestaltung besteht darin, dass die Auswertevorrichtung derartig ausgestaltet ist, bei einer Auswertung der Auswertefunktion Spektren ab einer dritten Ordnung zu ermitteln.

Weiterhin löst die Erfindung die Aufgabe durch ein Verfahren zum Überwachen eines rotierenden Elements.

Das Verfahren umfasst dabei zumindest die folgenden Schritte:

- ausgehend von Vibrationen des rotierenden Elements wird ein zeitabhängiges Vibrationssignal erzeugt,
- anhand des Vibrationssignals und anhand einer zeitabhängigen Drehzahl des rotierenden Elements und/oder anhand eines von einer zeitabhängigen Drehzahl des rotierenden Elements abhängigen Werts wird eine Aussage über einen Zustand des rotierenden Elements ermittelt.

Die Ermittlung der Aussage über den Zustand des rotierenden Elements erfolgt dabei:

- indem das Vibrationssignal mit einer von einer vorgebbaren Anfangsfrequenz und von der Drehzahl und/oder von einem von der Drehzahl abhängigen Wert abhängigen harmonischen Analysefunktion unter Einfügung einer vorgebbaren Zeitverschiebung zwischen dem Vibrationssignal und der Analysefunktion korreliert wird,
- indem ausgehend von einer durch eine Kreuzkorrelation erhaltenen Auswertefunktion die Aussage über den Zustand des rotierenden Elements ermittelt wird, und
- indem Werte der Anfangsfrequenz und/oder der Zeitverschiebung variiert werden.

Die Analysefunktion ist somit abhängig von einer vorgebbaren Anfangsfrequenz und von der Drehzahl. Alternativ oder ergänzend ist die Analysefunktion abhängig von einer vorgebbaren Anfangsfrequenz und von einem von der Drehzahl abhängigen Wert. Weiterhin wird für die Korrelation die Anfangsfrequenz und/oder die Zeitverschiebung variiert, sodass sich entsprechend unterschiedliche Auswertefunktionen für die Auswertung in Hinblick auf die Aussage über den Zustand des Elements ergeben.

Dabei gelten die obigen Ausführungen und Ausgestaltungen zu der Vorrichtung entsprechend auch für das erfindungsgemäße Verfahren. Umgekehrt lassen sich auch Verfahrensschritte durch Ausgestaltungen der Vorrichtung realisieren, so dass auch die Ausführungen bezüglich des Verfahrens für die Vorrichtung gelten.

Im Einzelnen gibt es eine Vielzahl von Möglichkeiten, die erfindungsgemäße Vorrichtung und das erfindungsgemäße Verfahren auszugestalten und weiterzubilden. Dazu wird verwiesen einerseits auf die Patentansprüche, ande-

**EP 3 571 487 B1**

rerseits auf die folgende Beschreibung von Ausführungsbeispielen in Verbindung mit der Zeichnung. Es zeigen:

Fig. 1     eine skizzenhafte Darstellung einer erfindungsgemäßen Vorrichtung in Verbindung mit einem Element;

Fig.2     ein Spektrogramm vom simulierten Körperschall einer anlaufenden Maschine;

Fig. 3     eine Zeit-Frequenz-Verteilung einer rotierenden Maschine;

Fig. 4     ein Diagramm mit den Beträgen der Analysefunktionen der Kurven der Fig. 3;

Fig. 5     ein Ordnungsspektrum des Signals der Fig. 3;

Fig. 6     ein Diagramm der Auswertefunktion aus einer Kreuzkorrelation eines Vibrationssignals mit einer Analysefunktion;

Fig. 7     einen Primärbereich eines Ordnungs-Bispektrums des Signals der Fig. 3,

Fig. 8     ein Zeit-Frequenz-Diagramm der Analysefunktion als Kreuzkorrelationsfunktion zwischen der verrauschten Summe aus drei linearen Chirps und einer Analysefunktion aus C2 (mittlerer Chirp),

Fig. 9     eine Blockdiagrammdarstellung der Vorrichtung zur Analyse eines mit einer Drehzahl rotierenden Elements gemäß Ausführungsbeispielen der vorliegenden Erfindung;

Fig. 10     eine Erläuterung der unterschiedlichen Analysefunktionen gemäß einem Ausführungsbeispiel;

Fig. 11     ein Spektrogramm für ein Vibrationssignal;

Fig. 12     eine Veranschaulichung der Zeitverschiebung und der Frequenzverschiebung zwischen einer wahren und gemessenen Drehfrequenz;

Fig. 13     ein Ordnungsspektrum des Vibrationssignals für ein Analysefenster;

Fig. 14     eine Korrelationsfunktion mit festem Ordnungsfaktor und variabler Zeitverschiebung;

Fig. 15a     eine Korrelationsfunktion mit fester Zeitverschiebung und variabler Analysefrequenz;

Fig. 15b     eine zweidimensionale Darstellung der Korrelationsfunktion mit fester Zeitverschiebung und variabler Analysefrequenz;

Fig. 16     ein Flussdiagramm für eine iterative Bestimmung der Korrelationsfunktion;

Fig. 17a     eine Darstellung einer Bestimmung eines Korrelationsergebnisses mit komplexer Analysefunktion;

Fig. 17b     eine Darstellung der Berechnung eines reellen Korrelationsergebnisses;

Fig. 17c     eine Darstellung der Berechnung des Realteils und des Imaginärteils des komplexen Korrelationsergebnisses.

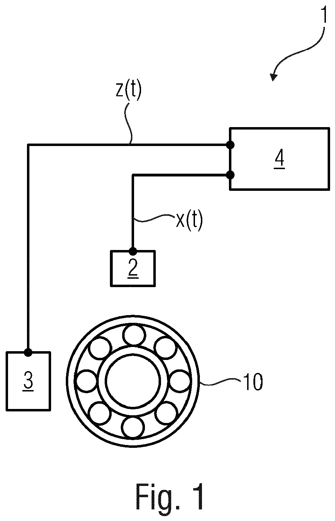

Die Fig. 1 zeigt eine Überwachung eines rotierenden Elements 10 durch eine Vorrichtung 1. Bei dem Element 10 handelt es sich als Beispiel um ein Kugellager.

Die Vorrichtung 1 verfügt über einen Vibrationssensor 2 und eine Auswertevorrichtung 4. Ergänzend ist in der dargestellten Ausgestaltung noch ein Rotationssensor 3 vorhanden.

Der Vibrationssensor 2 erzeugt ein zeitabhängiges Vibrationssignal: x(t), das die Vibrationen/Schwingungen des rotierenden Elements 10 beschreibt. Die Rotationen/Drehungen des Elements 10 werden in der gezeigten Ausgestaltung messtechnisch (alternativ erfolgt dies beispielsweise durch Auswertung der Schwingungen des Elements 10) erfasst, wobei der Rotationssensor 3 in der gezeigten Ausgestaltung die zeitabhängige Drehzahl des Elements 10 erfasst und das Messsignal der zeitabhängigen Drehzahl z(t) erzeugt.

Das Vibrationssignal x(t) und die Drehzahl z(t) werden an die Auswertevorrichtung 4 übermittelt, um dort für die Ermittlung einer Aussage über den Zustand des rotierenden Elements 10 verarbeitet zu werden. Details der Verarbeitung werden im Folgenden besprochen.

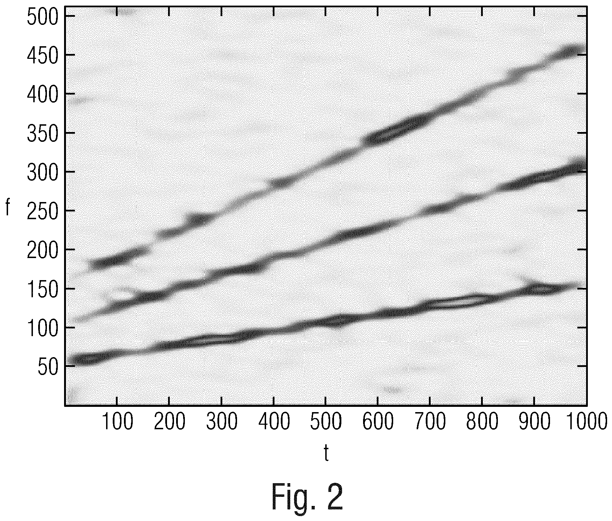

Die Grafik in Fig. 2, in der die Zeit auf der x-Achse und die Frequenz auf der y-Achse aufgetragen ist, zeigt eine realitätsnahe Simulation des Körperschalls einer anlaufenden Maschine. Bei dem simulierten SNR = 1,7 dB versagen die Hüllkurvendemodulation sowie die Integraltransformationen nach Hilbert und Fourier. Selbst im Spektrogramm ist eine Detektion nicht möglich. Somit wird die Erfordernis der Erfindung deutlich.

Die Erfindung ermöglicht es, auch sehr schwache Vibrationssignale (SNR von weniger als +10 dB und bis zu -60 dB) eines Schallaufnehmers oder allgemein Vibrationssensors (z. B. Beschleunigungssensor, Lasermikrofon, Vibrationssensor, Geometriesensor) unter den Bedingungen einer zeitlich variablen Drehzahl mit dem Ziel auszuwerten, Defekte an einem rotierenden Element (rotierendes Bauteil oder rotierende Maschine usw.) nachzuweisen.

Für die Beschreibung wird zunächst eine zeitlich variable Analysefunktion definiert:

$$h(t) = exp\big(jfsr(t)\big) \tag{1}$$

Dabei werden folgende Bezeichnungen verwendet:

-   j ist die Imaginäreinheit.

**5**

- r(t) ist die zeitlich variable Phase nach den bis zum Zeitpunkt t erfolgten Drehungen während der Analysezeit. Es handelt sich somit um das Zeitintegral in Bezug auf die Drehzahl z(t), wobei z(t) = dr(t)/dt.
- f ist der Anfangswert der Analysefrequenz (oder ein anders definierter Frequenzwert).
- s ist ein reellwertiger Skalierungsfaktor bzw. Ordnungsfaktor im Frequenzbereich.

Dabei gilt als Zusammenhang zwischen der Drehzahl z(t) und der zeitlich variablen Phase r(t) als von der Drehzahl abhängiger Wert:

$$z(t) = dr(t) \, / \, dt \tag{1.1}$$

In der Formel (1) sind implizit beide üblichen trigonometrischen Funktionen Sinus und Cosinus sowie ihre orthogonale Kombination im Raum der Komplexzahlen enthalten.

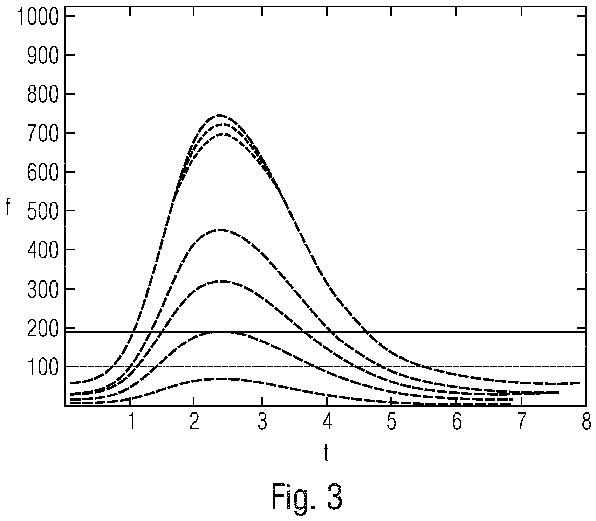

Die Grafik der Fig. 3 zeigt eine simulierte realitätsnahe Zeit-Frequenz-Verteilung (TFD, time-frequency-distribution, speziell SPWD, smoothed pseudo-Wigner distribution) einer drehenden Maschine, wobei auf der x-Achse die Zeit und auf der y-Achse die Frequenz aufgetragen ist. Zu erkennen ist, dass sich drehzahlunabhängige (also konstante) Frequenzen und drehzahlabhängige (zeitvariable) Verläufe additiv überlagern.

Alle wichtigen Details - sowohl drehzahlunabhängige (frequenzkonstante) Komponenten als auch (modulierte) Harmonische der Drehzahl - sind deutlich sichtbar und identifizierbar. Aus dieser Darstellung wird ersichtlich, dass die Information über die absolute Phase r(t) aus Formel (1) sowie über die Drehzahl z(t) gemäß Formel (1.1) - als Alternative zur direkten Messung - aus der TFD ermittelt werden können.

Um in solchen Signalen statistisch nachweisbare Harmonische der Drehzahl (Ordnungen) zu identifizieren, die auf Defekte hinweisen, reicht bei solchen Beispielen mit einem SNR von 9 dB eine Hüllkurvendetektion nicht aus. Daher besteht der Bedarf nach der Erfindung.

Im Vibrationssignal x(t) werden reellzahlige Harmonische der Drehzahl z(t) (in der Fachsprache der Vibrationsanalyse "Ordnungen" bzw. "signifikante Pegel im Ordnungsspektrum") gesucht. Daher kann die Korrelation zwischen der Analysefunktion h(t) und dem Vibrationssignal x(t) berechnet werden:

$$\rho = \int x(t) \cdot h(t) dt \tag{2}$$

In den meisten Fällen liegen diskretisierte Signale vor, sodass sich die Korrelation aus dem Skalarprodukt der Vektoren (Spaltenvektoren) des Vibrationssignals x und der Analysefunktion h ergibt (fettgedruckte Kleinbuchstaben markieren Vektoren, das hochgestellte T steht für Transposition):

$$\rho = \mathbf{X} \cdot \mathbf{h^T} \tag{3}$$

Im Allgemeinen ist die Zeitverschiebung zwischen einem Vibrationssignal x(t) und einer Analysefunktion h(t) nicht bekannt. Die Analysefunktion h(t) ist oft ein zeitdiskreter Vektor der DFT (Diskrete Fourier-Transformation) bzw. der STFT (Short-Time Fourier Transformation) für das Spektrogramm. Daher wird hier die Korrelation in Abhängigkeit von der Zeitverschiebung τ untersucht werden.

Daher wird die KKF (Kreuzkorrelationsfunktion) ermittelt, die einer Faltung des Vibrationssignals x(t) mit der zeitlich gespiegelten Analysefunktion h(t) entspricht:

$$y(\tau) = \int x(\tau) \cdot h(t + \tau) d\tau = x(t) * h(-t) = \int x(t) \cdot h(t - \tau) dt \tag{4}$$

Das Signal y(τ) repräsentiert die KKF des Vibrationssignals x(t) und der Analysefunktion h(t) in Abhängigkeit von der Zeitverschiebung τ und kann daher auch als das Ausgangssignal eines Optimalfilters (matched filter, MF) interpretiert werden. Die Koeffizienten des Optimalfilters entsprechen der zeitlich gespiegelten Analysefunktion nach Formel (1) im zeitdiskreten Bereich, h(-t).

Da die Ordnungen im Spektrum reellwertig sind und die Informationen über die aktuelle Drehzahl z(t) sowie über die wahre Zeitverschiebung τ nicht bekannt sind, wird die Auswertefunktion y(t) um eine Translation in Zeit sowie ein Skalierung in Frequenz erweitert:

$$y(t, \tau, \upsilon) = x(t + \tau) \cdot h(t, \upsilon) \tag{5}$$

oder

$$y(t, \tau, s) = x(t + \tau) \cdot h(t, s) \tag{5a}$$

Dabei ist τ die unbekannte Zeitverschiebung zwischen dem gemessenen Signal x(t) und der Drehzahl z(t), v ist eine vorgebbare (Anfangs-) Frequenz der Analysefunktion h(t) nach Formel (1) und entspricht der mit s skalierten absoluten Frequenz f:

$$\upsilon = s \cdot f$$

Die Anfangsfrequenz v entspricht damit auch einer Frequenzverschiebung.

Dabei kann Formel (5) - beispielsweise für Echtzeit-Korrelationsanalyse und/oder für optimale Filterung - entlang der aktuellen Zeit t (auch τ) nach Formel (4) integriert werden.

Die Auswertefunktion y(t, τ, v) oder *y(t, τ, s)* ist hinsichtlich ihrer Variablen dreidimensional, sodass der Energiedetektor bzw. die Auswertevorrichtung für die Suche nach Defekten dementsprechend anzupassen ist.

In einer Ausgestaltung beruht die Auswertevorrichtung darauf, dass das Signal y(t, τ, v) nach Formel (5) sein Energiemaximum erreicht, wenn die wahren Werte der Zeitverschiebung τ und der Frequenzverschiebung v erreicht werden, die zum untersuchten Zeitpunkt t vorhanden.

Die Funktion nach Formel (5) wird alternativ als dreidimensionale Korrelation zwischen der um v oder s frequenzverschobenen Analysefunktion h(t) gemäß Formel (1) und dem um τ verschobenen Vibrationssignal x(t) interpretiert werden.

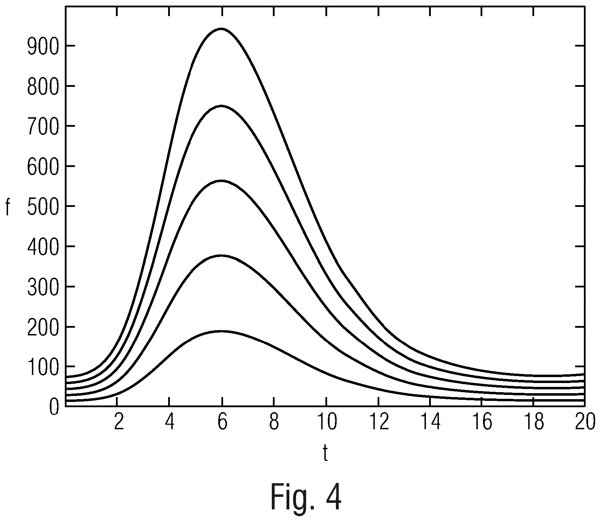

Ein Beispielsatz von analytischen Funktionen für das Signal aus Fig. 3 zeigt die Grafik in Fig. 4. Dargestellt ist der Betrag der komplexen analytischen Funktionen für das Signal aus Fig. 3 für ganzzahlige Skalierungen s = 1, 2, 3, 4, 5 mit einer Anfangsfrequenz v = 10 Hz und τ = 0. Mit diesen Analysefunktionen werden Korrelationen mit dem Vibrationssignal x(t) berechnet.

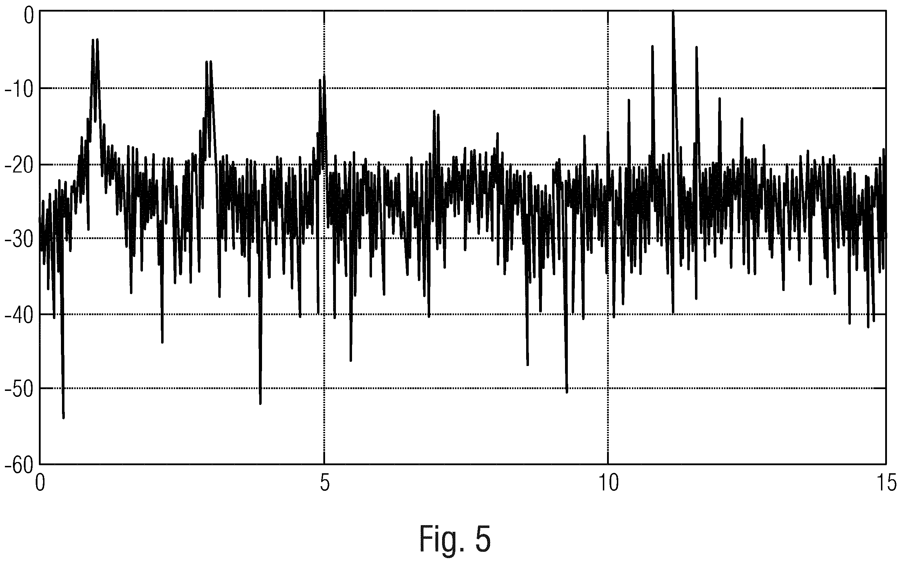

Das folgende Beispiel der Fig. 5 zeigt, wie sich die Skalierung s = 1, die Momentanfrequenz f = 10Hz (und damit einer Anfangsfrequenz v = 10) und die aktuelle Drehzahl z(t) bei nullwertiger Zeitverschiebung τ auf das komplexe Ordnungsspektrum auswirken. Die Abszisse gibt die Ordnung im Ordnungsspektrum an, die Ordinate den Betrag des komplexen Korrelationswertes zwischen dem Vibrationssignal x(t) als Messsignal und der aktuellen Analysefunktion h(t).

Dargestellt ist in der Fig. 5 ein Ordnungsspektrum (Betrag) des Signals y(t, τ, v) oder *y(t, τ, s)* aus Fig. 3 nach Skalierung s = 1 und der Anfangsfrequenz v = 10 Hz (also v = s*f = 10 Hz). Die Zeitverschiebung τ ist nullwertig. Nahezu alle wichtigen Komponenten sind mit einem Energiedetektor nachweisbar, obwohl der SNR im Zeitsignal nur +9 dB beträgt.

Da in der Realität die wahre Drehzahl bzw. die Phase der Drehungen nicht bekannt oder nicht sicher gemessen ist, hilft die Analyse mit einer variablen Zeitverschiebung τ nach Formel (1) und Formel (4) bzw. Formel (5).

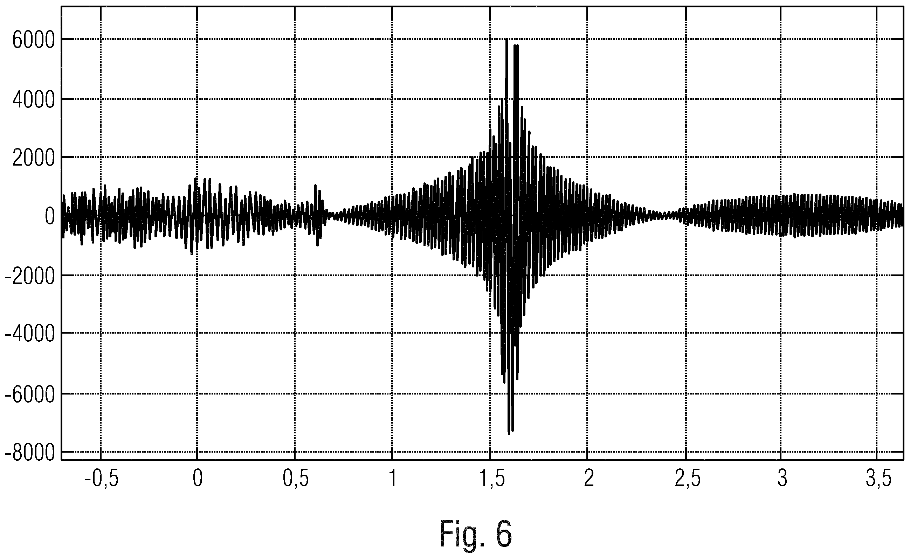

Das Ergebnis in Bezug auf die Zeitverschiebung zeigt Fig. 6. Dabei ist die Kreuzkorrelationsfunktion (KKF) zwischen dem Vibrationssignal x(t) und der um zwei Sekunden verschobenen Analysefunktion h(t) ($16*10^3$ Samples) aufgetragen, d. h. es besteht eine Zeitverschiebung τ = 2 s. Die Grafik zeigt ein eindeutiges Betragsmaximum bei der tatsächlichen Zeitverschiebung.

Wird das Signal y(t) zeitlich diskretisiert ausgewertet, so ergibt sich die theoretische Verbesserung des SNR aus der zeitdiskreten Länge der analytischen Funktion (1) zu:

$$\Delta SNR = 10 \, log_{10} N,$$

wobei N die Anzahl der Abtastperioden der analytischen Funktion ist.

Auf diese Weise kann eine einstellbare Verbesserung des SNR entlang des Vibrationssignals x(t) bis zu seiner maximalen Länge erreicht werden, falls die Drehzahl bekannt ist (gemessen oder berechnet). Die Erweiterung um die Zeitverschiebung τ in Formel (5) berücksichtigt die reale Eigenschaft der Signalerfassung, dass die Drehzahl nicht simultan, sondern erst nach einer gewissen Verzögerung vorliegt, die für die Drehzahlmessung technologisch notwendig ist.

Aus dem komplexen Ordnungsspektrum des Signals y(t, τ, v) nach Formel (5) oder *y(t, τ, s)* nach (5a) lassen

EP 3 571 487 B1

sich Ordnungsspektren höherer Ordnungen (o >2) berechnen, aus denen über eine Integraltransformation (z. B. Fourier, Hilbert, Wigner) auf statistisch nachweisbare Phasenkopplungen - und damit auf funktionale Zusammenhänge - geschlossen werden kann.

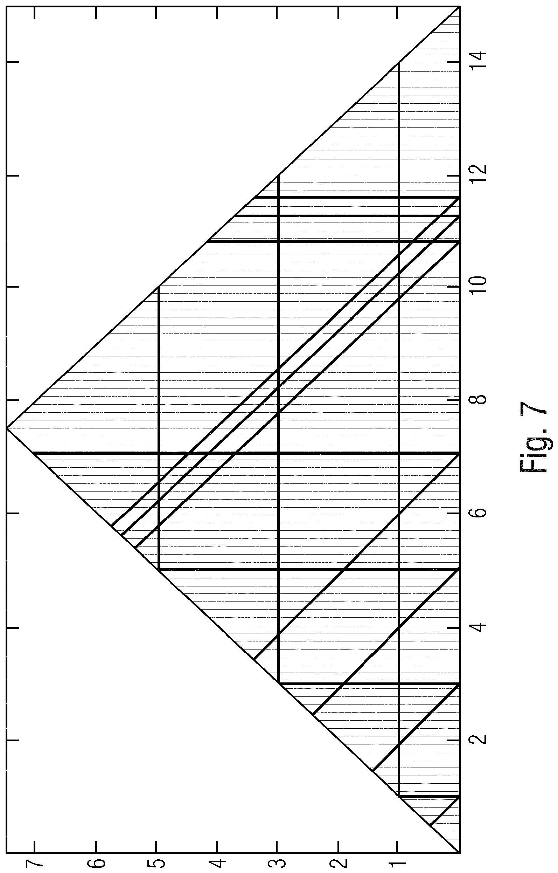

Aus Sicht der Praktikabilität bieten sich das Bispektrum und das Trispektrum an (siehe Fig. 7). Für die Berechnung des Ordnungs-Bispektrums wurde eine Formel verwendet, die auf Formeln (1) und (5) basiert:

$$B(o1, o2) = Y(o1) \cdot Y(o2) \cdot Y^*(o1 + o2) \qquad (6)$$

Dabei ist Y(o) die komplexe Ordnungstransformierte nach Formel (5) und o ist die Ordnung. Y(o) wird nach der Maximumssuche in Bezug auf die Zeitverschiebung $\tau$ ermittelt. Das Zeichen * markiert die konjugiert komplexe Funktion. Sollten Phasenkopplungen (und daher funktionale Verbindungen) zwischen den Ordnungskomponenten von Interesse sein, so wird Formel (6) auf Segmente des Vibrationssignals angewandt und arithmetisch gemittelt:

$$\widehat{B}(o1, o2) = \frac{1}{M} \sum_{i=1}^{M} B_j(o1, o2) \qquad (7)$$

o1, o2 sind Ordnungen, Bi(o1, o2) das komplexe Bispektrum im i-ten Segment.

Die Fig. 7 zeigt den Primärbereich des Ordnungs-Bispektrums des Signals aus Fig. 3 nach Anwendung der Analysefunktion gemäß Formeln (1) und (5) sowie (6). Phasengekoppelte Signalkomponenten sind zuverlässig detektierbar. Die Energieinseln deuten auf statistisch hohe Zuverlässigkeit hin.

Die Vorteile der Erfindung seien noch einmal beschrieben:

Im Vergleich zu bestehenden Methoden der vibrationsbasierten Diagnostik mittels Hüllkurvendetektion werden die durch die Nichtlinearität des Amplitudendemodulators (Spitzenwertdetektor) verursachten Störprodukte mit dem angemeldeten Verfahren vermieden. Dadurch steigt die diagnostische und statistische Zuverlässigkeit der Defektsuche.

Für die Auswertung des Vibrationssignals ist bereits ein einziger Sensor zur Erfassung von Vibrationen (Körperschall) ausreichend. Ein zusätzlicher Sensor zur Erfassung der Drehzahl bzw. eines davon abhängigen Werts ist eine beispielhafte Ausgestaltung. Es lassen sich somit Diagnostiksysteme aufbauen, die keinen physischen Kontakt mit der Maschine bzw. mit dem rotierenden Teil benötigen, so z. B. mit einem Laserscanner.

Durch die Erfindung wird eine frühzeitige Diagnostik von rotierendem Element bei einem schwachen SNR kleiner als 10 dB und einer zeitlich variablen Drehzahl überhaupt erst möglich. Die signifikante Anhebung des SNR mittels Korrelation mit einer zeitvariablen Analysefunktion bildet die Basis für weitergehende Analysen. Insbesondere Statistiken und Spektren höherer Ordnung (HOS, Higher Order Statistics) ermöglichen die Analyse funktionaler Zusammenhänge zwischen einzelnen Defekten. Im Ergebnis einer solchen Analyse kann beispielsweise die Frage beantwortet werden, ob zwei (oder mehr) im Vibrationssignal vorhandene Vibrationen auf zwei Defekte eines einzigen Wälzlagers oder auf zwei verschiedene Wälzlager zurückzuführen sind.

Man nehme an, ein Kugellager hat zwei defekte Kugeln. Das Vibrationssignal wird mit einem Beschleunigungssensor direkt von der Oberfläche der Maschine oder mit einem Lasermikrofon erfasst. Eine der Kugeln erzeugt einen Chirp bei 300 Hz, die andere bei 330 Hz. Beide liegen mit ihrem SNR oberhalb von 10 dB. Da sie sich im selben Lager drehen, haben beide eine Ordnung von z. B. r = 8 Hz. Die Diagnostik müsste folglich eine klare spektrale Spitze bei 8 Hz detektieren. Dies wird sie normalerweise leisten. Allerdings wird sie bei mindestens fünf Harmonischen (bei 16, 24, 32, 40, 48 Hz) ebenfalls detektierbare Spitzen zeigen, die es in der Realität nicht gibt. Dies ist die Folge der extremen Nichtlinearität der Betragsbildung in der Hüllkurvendetektion.

Ein ungünstigerer Fall liegt dann vor, wenn zwei (physisch) unabhängige Defekte vorliegen: Beispielsweise produziert eine Kugel in einem Lager eine Ordnung von 8 Hz und eine Eigenfrequenz von 300 Hz, eine andere Kugel in einem anderen Lager eine Ordnung von 11 Hz und eine Eigenfrequenz von 330 Hz. Der Hüllkurvendemodulator wird beide spektralen Spitzen der Ordnungen detektieren, allerdings auch eine unüberschaubare Menge von unkalkulierbaren Störprodukten, die je nach Situation auch den Charakter von weißem Rauschen annehmen können. Dadurch kann sich der SNR so dramatisch verschlechtern, dass eine ansonsten sichere Energiedetektion unmöglich wird.

Die Erfindung erlaubt die Erkennung der korrekten Defektordnungen und dies unabhängig von der Eigenfrequenz der einzelnen Defekte. Die anschließende HOS-Analyse würde anzeigen, ob die beiden Störungen von einem oder von zwei Lagern stammen.

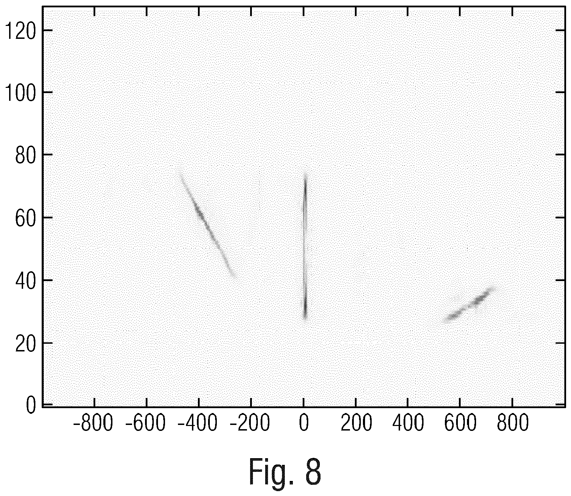

Für die verrauschte Summe aus drei linearen Chirps aus Fig. 3 wurde die KKF (Kreuzkorrelationsfunktion) berechnet und als TFD (Time-Frequency Distribution) in der Fig. 8 dargestellt. Als Analysefunktion wurde der C2 (mittlerer Chirp) eingesetzt. Da der gesuchte Chirp in der Summe aus C1, C2 und C3 exakt der Analysefunktion entspricht, erscheint er deutlich als detektierbarer Balken bei Zeitverschiebung von Null im Frequenzbereich der Analysefunktion. Würde es eine Zeitverschiebung im realen Signal im Vergleich zur Analysefunktion geben (wie in der Realität üblich), so hätte dies eine entsprechende Verschiebung entlang der Zeitachse in Fig. 8 zur Folge (wie üblich bei der KKF). Die Reste der Chirps C1 und C3 zeigen eine klare Abweichung von der Analysefunktion C2. Zu beachten ist, dass in der TFD, die die Fig. 8 zeigt, kaum Reste des Rauschens vorhanden sind, der SNR für die Detektion also ausreichend stark verbessert wurde.

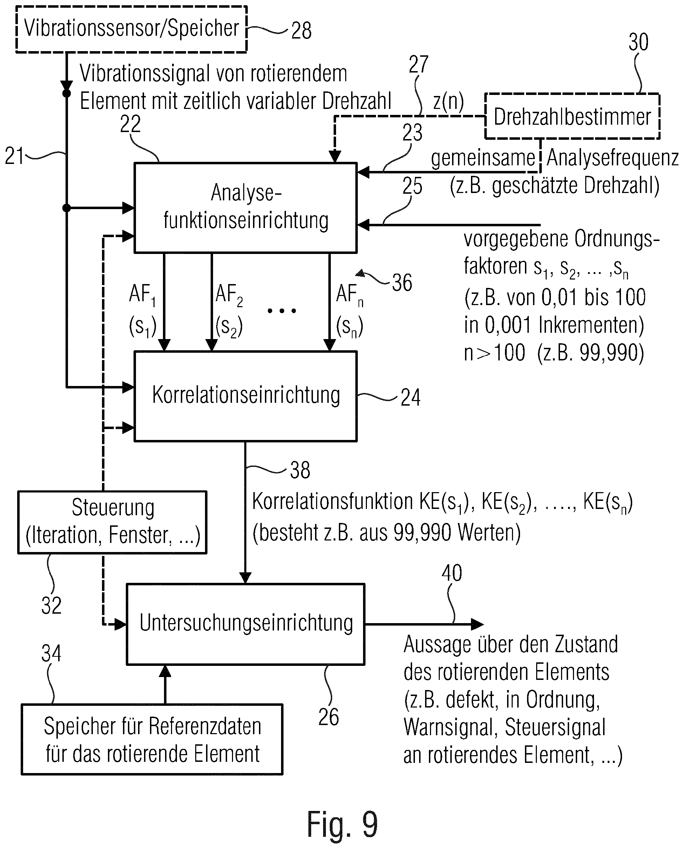

Fig. 9 zeigt ein Ausführungsbeispiel einer Vorrichtung zur Analyse eines mit einer Drehzahl rotierenden Elements auf der Basis eines Vibrationssignals, das von dem rotierenden Element stammt. Die Vorrichtung umfasst eine Analysefunktionseinrichtung 22 zum Bilden einer Mehrzahl von Analysefunktionen, wobei die Analysefunktionseinrichtung 22 ausgebildet ist, um jede Analysefunktion $Af_1$, ..... $Af_n$, die in Fig. 9 mit 36 dargestellt sind, auf der Basis einer Analysefrequenz zu berechnen, die vorzugsweise für jede Analysefunktion gleich ist, wie es bei 23 dargestellt ist. Ferner ist die Analysefunktionseinrichtung ausgebildet, um die Analysefunktionen auf der Basis von vorgebebenen Ordnungsfaktoren $s_1$, $s_2$, ....., $s_n$ zu bilden, wobei die vorgegebenen Ordnungsfaktoren für jede Analysefunktion unterschiedlich sind. Außerdem ist die Analysefunktionseinrichtung ausgebildet, um auf der Basis des Vibrationssignals 21 oder auf der Basis einer gemessenen oder geschätzten oder anderweitig bestimmten Drehzahl z(t) (zeitkontinuierlich) bzw. z(n) (zeitdiskret), die von dem Drehzahlbestimmer 30 stammen kann, wie es bei 27 dargestellt ist, zu arbeiten, um die einzelnen Analysefunktionen zu bestimmen.

Die Vorrichtung umfasst ferner eine Korrelationseinrichtung 24 zum Berechnen einer Korrelationsfunktion. Die Korrelationsfunktion 38 wird von der Korrelationseinrichtung 24 an eine Untersuchungseinrichtung 26 übergeben. Die Korrelationseinrichtung 24 ist ausgebildet, um aus dem Vibrationssignal, das bei 21 dargestellt ist und von einer Signalausgabeeinrichtung 28 bereitgestellt wird, und jeder Analysefunktion, die von der Analysefunktionseinrichtung 22 bereitgestellt wird, ein Korrelationsergebnis $KE(s_1)$, $KE(s_2)$, ...., $KE(s_n)$ zu berechnen. Jede Korrelationsergebnis ist dem Ordnungsfaktor zugeordnet, auf dem die Analysefunktion basiert, mit der das Korrelationsergebnis berechnet worden ist, und die Korrelationsergebnisse zusammen stellen hierbei die Korrelationsfunktion 38 dar. Diese Korrelationsfunktion 38 wird an eine Untersuchungseinrichtung 26 geliefert, um eine Aussage 40 über den Zustand des rotierenden Elements zu liefern.

Die Einrichtung 28, aus der das Vibrationssignal stammt, kann je nach Implementierung der vorliegenden Erfindung ein Vibrationssensor sein, wie beispielsweise der Vibrationssensor 2. Dies stellt ein "Online"-Ausführungsbeispiel dar, das im Betrieb des rotierenden Elements eine Messung vornimmt. In einer "Off-line"-Variante wäre das Element 28 ein Speicherelement, in dem das Vibrationssignal gespeichert ist, das z. B. zu einem früheren Zeitpunkt vom rotierenden Element abgenommen worden ist. Die Vorrichtung zur Analyse des rotierenden Elements kann somit sowohl in einer Online-Ausführungsform eingesetzt als auch in einer Offline-Ausführungsform. Wenn das rotierende Element beispielsweise ein Rad eines Schienenfahrzeugs oder irgendein anderes bewegtes Teil eines Schienenfahrzeugs, Straßenfahrzeugs oder eines anderen Fahrzeugs ist, würde die Vorrichtung zur Analyse gewissermaßen an Bord dieses Fahrzeugs implementiert sein, um eine Online-Variante auszuführen, bei der im Betrieb, und lediglich nach einer kurzen systembedingten Verzögerung, die im Bereich weniger Minuten oder sogar weniger einer Minute liegt, bereits eine Aussage über den Zustand des rotierenden Elements getroffen werden kann. Bei einer Offline-Variante würde das Speicherelement als Element 28 relevant sein. Hierbei würde das vorher aufgezeichnete Vibrationssignal im Nachhinein, also nach der eigentlichen Messung, analysiert werden.

Die Untersuchungseinrichtung 26 ist in der Lage, als beispielhafte Aussage über den Zustand des rotierenden Elements herauszufinden, ob das Element defekt ist, oder ob das Element in Ordnung ist. Eine weitere Aussage über den Zustand des rotierenden Elements wäre beispielsweise ein Warnsignal, ein Steuersignal an das rotierende Element oder an ein Element, das das rotierende Element antreibt oder mit dem rotierenden Element verbunden ist. Würde beispielsweise im Falle eines Schienenfahrzeugs, wie beispielsweise einer U-Bahn durch die Untersuchungseinrichtung 26 festgestellt werden, dass die Korrelationsfunktion unerwartete Eigenschaften hat, so könnte eine Aussage 40 über den Zustand des rotierenden Elements ein Bremssignal sein, um das Schienenfahrzeug abzubremsen, oder aber ein Warnsignal an den Fahrzeugführer mit dem Hinweis, nicht weiter zu beschleunigen bzw. sobald wie möglich anzuhalten, etc.

Je nach Ausführungsform ist die Untersuchungseinrichtung 26 mit einem Speicher 34 für Referenzdaten für das rotierende Element verbunden, um die Korrelationsfunktion 38, die von der Korrelationseinrichtung 24 geliefert worden ist, oder Informationen, die von dieser Korrelationsfunktion abgeleitet worden sind, mit einer entsprechenden Korrelationsfunktion aus dem Speicher 34 als Referenz-Korrelationsfunktion zu vergleichen. Werden nicht Korrelationsfunktionen verglichen, sondern Daten, die von den Korrelationsfunktionen abgeleitet sind, so würde die Untersuchungseinrichtung 26 aus dem Speicher 34 diese Referenzdaten, die von der Referenz-Korrelationsfunktion abgeleitet worden sind, beziehen und mit den tatsächlich ermittelten Korrelationsfunktionsdaten, die von der Einrichtung 24 geliefert worden sind, vergleichen. Alternative oder zusätzlich ist die Untersuchungseinrichtung ausgebildet, um ohne Vergleich mit einem Referenzmuster allein aus der Korrelationsfunktion und ggf. unter Verwendung empirisch gefundener Regeln eine Aussage über den Zustand des rotierenden Elements zu treffen.

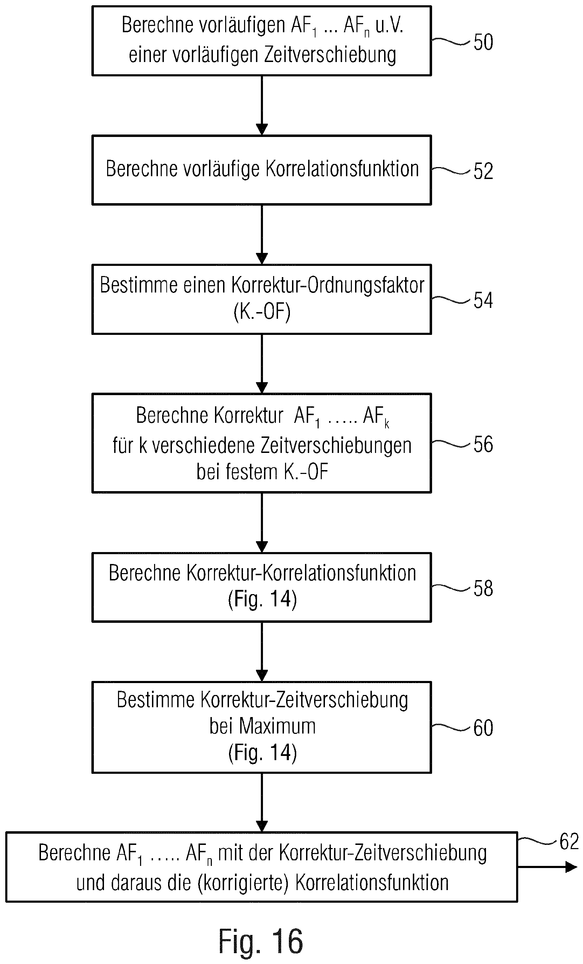

Die Vorrichtung umfasst je nach Implementierung eine zusätzliche Steuerung für eine iterative Verbesserung des Messergebnisses, also für eine Iterations-Verarbeitung, die nachfolgend Bezug nehmend auf Fig. 16 dargestellt wird. Eine alternative Implementierung der Steuerung oder eine zusätzliche Implementierung der Steuerung besteht darin, eine gewisse Analysefenster-Verarbeitung anzusteuern, die nötig ist, um eine diskretisierte Verarbeitung in der Analysefunktionseinrichtung, der Korrelationseinrichtung und vorzugsweise auch in der Untersuchungseinrichtung zu erreichen.

Darüber hinaus ist die Analysefunktionseinrichtung 22 vorzugsweise über den Eingang 23 mit einem Drehzahlbestimmer 30 verbunden, der ausgebildet ist, um eine Drehzahl des rotierenden Elements zum Beispiel zu einem Beginn oder zu einem anderen Zeitpunkt des Analysefensters zu messen bzw. abzuschätzen und diesen geschätzten Wert einer Analysefrequenz der Analysefunktionseinrichtung 33 zuzuführen, damit diese basierend auf diesem von dem Drehzahlbestimmer 30 gelieferten Wert die Mehrzahl von Analysefunktionen für die unterschiedlichen Ordnungsfaktoren bestimmen kann.

Vorzugsweise ist die Analysefunktionseinrichtung 22 ausgebildet, um eine hohe Anzahl von verschiedenen Analysefunktionen zu bilden. Vorzugsweise werden Analysefunktionen mit Ordnungsfaktoren zwischen 0,01 und 100 in 0,001 Inkrementen gebildet, wobei eine noch feinere Inkrementierung der Ordnungsfaktoren eingesetzt werden kann oder auch je nach Implementierung und möglichem Aufwand eine gröbere Inkrementierung. Je nachdem, ob die Drehzahl des rotierenden Elements genauer geschätzt worden ist, wird eine gröbere Inkrementierung der Ordnungsfaktoren möglich sein. Auf jeden Fall werden nicht nur ganzzahlige Ordnungsfaktoren, sondern typischerweise reellwertige, also nicht-ganzzahlige Ordnungsfaktoren verwendet. Darüber hinaus ist es je nach Implementierung möglich, unterschiedliche Bereiche von Ordnungsfaktoren einzusetzen, also Bereiche, die kleiner als der beispielhafte dargestellte Bereich sind. Insbesondere in Fällen, bei denen die gemeinsame Analysefrequenz gewissermaßen "blind" vorgegeben ist bzw. bei denen nur eine grobe Schätzung der Drehzahl vorliegt, wird eine feine Inkrementierung der Ordnungsfaktoren günstig sein, um dennoch eine Analysefunktion zu haben, die relativ genau auf eine bestimmte Harmonische der (unbekannten oder nur grob geschätzten) zeitlich variablen Drehzahl des rotierenden Elements "trifft".

Die Analysefunktionen $h(t, \tau, s)$ bzw. $y(t, \tau, v)$ können gemäß Gleichung (1) bestimmt werden. Alternativ werden die Analysefunktionen gemäß folgender Gleichung (8) bestimmt.

$$ h(t, \tau, v) = exp\big(j2\pi sft + jsr(t + \tau)\big) \tag{8} $$

Dabei werden folgende Bezeichnungen verwendet:

- j ist die Imaginäreinheit.
- r(t) ist die zeitlich variable Phase nach den bis zum Zeitpunkt t erfolgten Drehungen während der Analysezeit. Es handelt sich somit um das Zeitintegral in Bezug auf die Drehzahl z(t), wobei z(t) = dr(t)/dt.
- f ist der Anfangswert der Analysefrequenz (oder ein anders definierter Frequenzwert, wie beispielsweise ein Schätzwert für die Drehfrequenz).
- s ist ein reellwertiger Skalierungsfaktor im Frequenzbereich.
- $\tau$ ist die unabhängige Variable Zeitverschiebung.

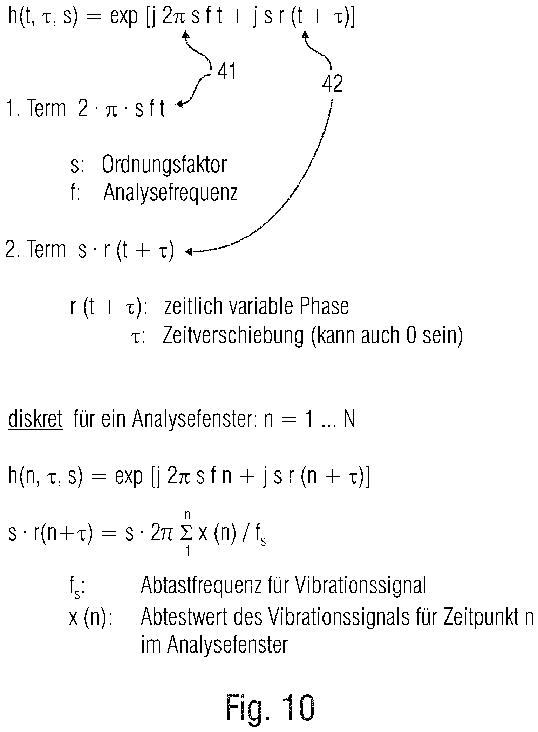

Fig. 10 zeigt eine Zusammenfassung einer bevorzugten Analysefunktion bzw. eine Gruppe von Analysefunktionen, die auch in Gleichung 8 dargestellt ist. Diese Gruppe von Analysefunktionen umfasst den ersten Term 41, der neben dem entsprechenden Ordnungsfaktor s auch die gemeinsame Analysefrequenz f aufweist. t ist die Zeitvariable. Ferner umfasst die Gruppe von Analysefunktionen einen zweiten Phasenterm, in dem erneut der Ordnungsfaktor vorhanden ist, und in dem ferner eine zeitlich variable Phase vorhanden ist, die zusätzlich mit einer Zeitverschiebung versehen ist, wobei diese Zeitverschiebung jedoch auch null sein kann, so dass bei einem Ausführungsbeispiel die Variable $\tau$ in der Gleichung (8) nicht vorhanden ist, derart, dass die Gruppe von Analysefunktionen lediglich noch von der Ordnungszahl s und der Zeitvariable t, bzw. wie es in Fig. 10 der unteren Hälfte dargestellt ist, von der diskreten Zeitvariable n abhängt.

Die einzelnen Analysefunktionen werden sowohl bei dem Bezug nehmend auf Gleichung 8 dargestellten Ausführungsbeispiel als auch bei dem Bezug nehmend auf Gleichung 1 dargestellten Ausführungsbeispiel dadurch bestimmt, dass für jede Analysefunktion zwar dieselben Daten für f und r eingesetzt werden, jedoch ein anderer Ordnungsfaktor gewählt wird. Damit wird für jeden Ordnungsfaktor eine eigene Analysefunktion erhalten.

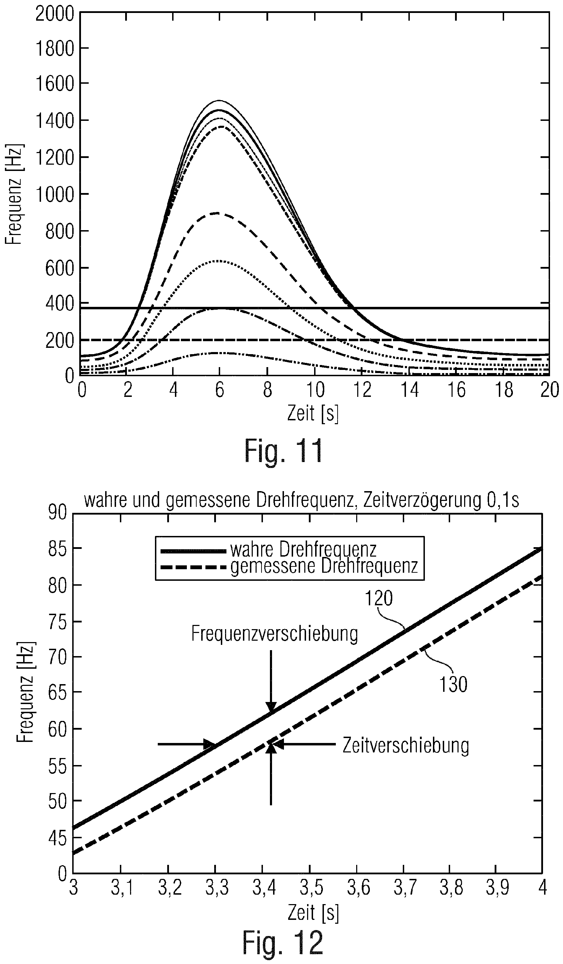

Nachfolgend wird ein Realisierungsbeispiel dargestellt, welches eine Online-fähige Variante repräsentiert. Die Offline-Variante ergibt sich durch einfache Umstellung auf statische Daten aus der dargestellten Online-Variante. Als Beispielsignal wird auf das in Fig. 3 bzw. Fig. 4 und nachfolgend auch in Fig. 11 dargestellte Messsignal Bezug genommen, wobei darauf hingewiesen wird, dass Fig. 11 nicht das Vibrationssignal an sich darstellt, sondern ein Spektrogramm der Schwingungen, die durch eine SPWD, also eine Smoothed Pseudo Wigner Distribution erhalten worden ist. Tatsächlich wird als Vibrationssignal 21 in Fig. 9 nicht die Spektrogramm-Darstellung von Fig. 11 verwendet, sondern ein dieser Spektrogrammdarstellung zugrunde liegendes Vibrationssignal.

Für das nachfolgende Ausführungsbeispiel wird lediglich beispielhaft davon ausgegangen, dass eine Verarbeitung in einem Analysefenster zum Beispiel zu einem Zeitpunkt t = 3 s anfängt. Insbesondere wird gegenüber dem in Fig. 11 dargestellten Spektrogramm eine Verbesserung des Signal/Rausch-Abstands um etwa 40 dB in Bezug auf das Rauschen angestrebt. Daraus ergibt sich bei einer Abtastrate von beispielsweise 8000 sps (samples per second) eine Mindestlänge eines Analysefensters von ca. 1 Sekunde. Dies bedeutet, dass frühestens zum Zeitpunkt t = 4 s mit einer Analyse begonnen werden kann, da die Messwertaufnahme für das Analysefenster bei t = 3 s begonnen hat. Es wird bevorzugt, in Echtzeit zu rechnen, vorzugsweise im Takt der Abtastrate von 125 μs. Allerdings existiert aufgrund der Länge des (hinterherlaufenden) Analysefensters von 1 Sekunde eine entsprechende Latenz von wenigstens 1 Sekunde. Dennoch wird diese Analyse als Online-Verfahren angesehen, das eine sehr kleine systembedingte Latenz hat.

In dem Zeitfenster für die Analyse liegen Messdaten vor, die in dem Vibrationssignal zwischen dem Startzeitpunkt des Analysefensters bei 3 Sekunden und dem Endzeitpunkt des Analysefensters bei t = 4 s liegen.

Weiterhin wird es bevorzugt, dass Messdaten zur Drehfrequenz vorliegen. Diese Messdaten können, müssen jedoch nicht unbedingt vorliegen, sondern können zum Beispiel aus dem Spektrogramm, das in Fig. 11 dargestellt ist, zum Beispiel für die Grundwelle bei t = 3 s abgeschätzt werden. Für diese typischerweise ausreichende grobe Schätzung, die von dem Drehzahlbestimmer 30 in Fig. 9 durchgeführt wird, muss kein Spektrogramm vorliegen, das ein sehr hohes Signal/Rausch-Verhältnis hat. Aufgrund der kleinen Quantelung der Ordnungsfaktoren, die auch nicht-ganzzahlige Werte haben können, ist die Wahrscheinlichkeit hoch, dass trotz einer nicht genau geschätzten initialen Analysefrequenz zum Beispiel am Anfang des Analysefensters dennoch in der Korrelationsfunktion bei einer Ordnungszahl, die mit der Analysefrequenz multipliziert worden ist, die geschätzte Drehzahl "getroffen" wird.

Wenn jedoch der Drehzahlbestimmer 30 eine Online- oder Offline-Messung der Drehfrequenz liefert, ist dennoch davon auszugehen, dass der Messwert der Drehfrequenz immer eine bestimmte Zeit der wahren Drehzahl hinterherläuft und im theoretischen Fall auch vorausläuft. Diese Verzögerung $\tau$ wird prinzipbedingt mindestens eine Abtastperiode sein, zum Beispiel gegeben durch den Abstand zwischen zwei Zähnen an einem Zahnrad. Darüber hinaus ist diese Abtastperiode bzw. Zeitdauer $\tau$ prinzipiell auch über der Zeit variabel. Deshalb wird es bevorzugt, diesen Zeitversatz in der Analyse zu berücksichtigen. Dies wird durch eine Zeitverschiebung berücksichtigt, wie es in Fig. 12 dargestellt ist, und wie es auch in Gleichung 5 enthalten ist. Darüber hinaus wird es durch diese Zeitdifferenz auch zu einer unbekannten Frequenzverschiebung kommen. Daher zeigt Fig. 12 den Verlauf einer beispielhaft angenommenen wahren Drehzahl zwischen den Zeitpunkten t = 3 s und t = 4 s bei 120 und den Verlauf der gemessenen Drehfrequenz ebenfalls zwischen dem Zeitpunkt 3 Sekunden und dem Zeitpunkt 4 Sekunden bei 130.

Nachfolgend wird auf ein bevorzugtes Ausführungsbeispiel zur Bildung der Analysefunktionen eingegangen. Zur Bildung der Analysefunktionen werden die drei Parameter entsprechend der Gleichung 5 eingesetzt. Diese sind die Zeit t, die zwischen den Zeitpunkten t = 3 s und t = 4 s läuft und vorzugsweise durch eine diskretisierte Zeit mit einem Index n ersetzt wird, der dann, wenn 8000 Abtastwerte in einem Analysefenster vorliegen, von 1 bis 8000 läuft.

Darüber hinaus wird die Zeitverschiebung $\tau$, falls sie bekannt ist, auf den entsprechenden Wert gesetzt. Typischerweise ist jedoch weder die Zeitverschiebung der gemessenen Drehfrequenz noch die des Vibrationssignals in Bezug zur wahren Drehfrequenz bekannt. Daher wird es bevorzugt, einen entsprechenden Korrekturdurchlauf durch die Steuerung 32 zu initiieren, wie er in Fig. 16 beispielhaft noch erläutert wird. Hierzu wird bevorzugt, bei einem festen Ordnungsfaktor eine Anzahl von Analysefunktionen zu bestimmen, bei denen im Gegensatz zu den Ordnungsfaktoren, wie sie Bezug nehmend auf Fig. 9 beschrieben worden sind, nicht die Ordnungsfaktoren, sondern die Verzögerungszeit $\tau$, in einer bestimmten Art und Weise variabel ist, vorzugsweise in einer diskretisierten Dimension, die zum Beispiel von -1 s bis zu 1 s in Schritten von 5 ms läuft. Damit ergeben sich 200 unterschiedliche Analysefunktionen mit unterschiedlichen diskretisierten Verzögerungszeiten.

Die skalierte Frequenz $\upsilon$, die als Produkt der Analysefrequenz bzw. Anfangsfrequenz im Analysefenster f und dem diskreten Skalierungsfaktor bzw. Ordnungsfaktor gebildet wird, wird ebenfalls verwendet, um gemäß Fig. 10 bzw. Gleichung 8 oder Gleichung 1 die Analysefunktionen zu bilden. Generell ist unbekannt, bei welchen reellwertigen also ganzzahligen oder gebrochenen Skalierungen der Drehfrequenz Vibrationen auftreten können, wie es anhand von Fig. 11 dargestellt ist. Das dortige Spektrum, das beispielsweise das Anfahren und das darauffolgende Abbremsen eines Schienenfahrzeugs, wie beispielsweise eines U-Bahn-Zugs darstellt, führt zu diversen Oberwellen, die als Linien in Fig. 11 erkennbar sind.

Welche Linien jedoch auftreten ist von vorneherein nicht bekannt. Darüber hinaus ist gerade hier die Analyse mit einem hohen Signal/Rauschverhältnis von hoher Bedeutung, da es für eine genaue Analyse wichtig sein kann, festzustellen, welche Oberwellen existieren und darüber hinaus auch welche Oberwellen mit welcher Intensität existieren. Insbesondere kann ein durch die Untersuchungseinrichtung 26 von Fig. 9 dargestellter Vergleich zwischen einer gemessenen Korrelationsfunktion und einer gespeicherten Korrelationsfunktion zu der Situation führen, dass auf einmal in der gemessenen Korrelationsfunktion eine signifikante Oberwelle bei einem Skalierungsfaktor bzw. Ordnungsfaktor entdeckt wird, die in einer früheren Referenzmessung nicht vorhanden war bzw. die auf einen sich anbahnenden Defekt des rotierenden Elements bzw. eines mit dem rotierenden Element verbundenen Teils hinweist.

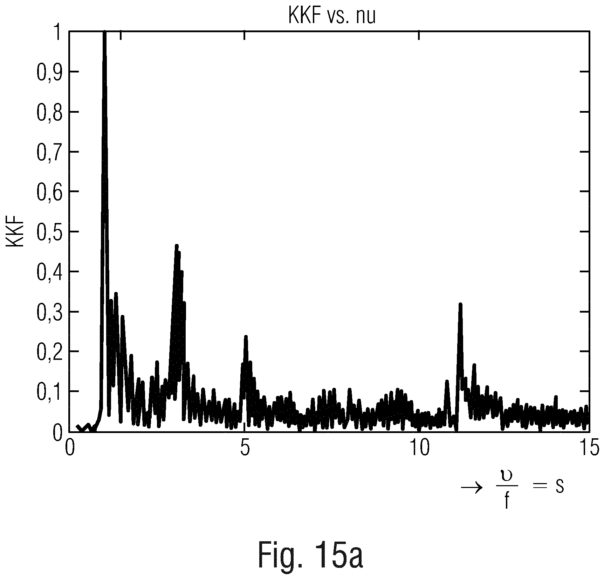

Vorzugsweise wird der Skalierungsfaktor bzw. Ordnungsfaktor s bzw. der Ordnungsfaktor s bei einem angemessenen niedrigen Wert, beispielsweise s = 0,01 beginnen und mit einer ausreichenden Auflösung, z. B. 0,001 bis zur Obergrenze der Skalierungsfaktoren bzw. Ordnungsfaktoren steigen, die vorzugsweise im Bereich von 100 liegen kann. Als Anfangsfrequenz f kann z. B. der erste gemessene Wert der Drehfrequenz im Analysefenster eingesetzt werden, der im konkreten Beispiel bei f = 42,7 Hz liegt, wie es auch Fig. 15a zugrunde liegt, bei der bei einem Ordnungsfaktor von 1 ein Maximum in der Kreuzkorrelationsfunktion KKF gemessen worden ist.

Die Phase r(t), die nach der Gleichung 1 oder 8 für die Konstruktion der Analysefunktionen erforderlich ist, könnte gemäß der Formel 1.1 theoretisch bzw. über Simulationen abhängig von dem Vibrationssignal berechnet werden. Es wird jedoch bevorzugt, insbesondere für die Online-Ausführungsform für den Startpunkt in einem Analysefenster einen Anfangswert zu setzen. Hier würde es bevorzugt, aus Einfachheitsgründen den Startpunkt r(t) = 0 zu setzen, obgleich auch andere Phasenwerte genommen werden können, da es prinzipiell nicht ohne Weiteres vorhersagbar ist, welche absolute Phase zum Anfang des Analysefensters existiert. Dann repräsentiert r(t) faktisch die Phasendifferenz zwischen dem Beginn und dem Ende des Analysefensters. Da das Analysefenster auch eine zeitliche Differenz im Vibrationssignal darstellt (Zeitpunktende minus Zeitpunktanfang), kann die Phasendifferenz als absolute Phase im betrachteten Zeitintervall interpretiert werden. Somit wird die Phase für das abgetastete zeitdiskrete Signal r(n) basierend auf folgender Gleichung berechnet:

$$r(n) = 2\pi \sum_{1}^{n} z(n)/f_s$$

wobei $f_s$ die Grundfrequenz der Abtastrate ist und in dem vorliegend betrachteten Beispiel gleich 8000 Hz gesetzt worden ist. z(n) stellt hierbei die geschätzte oder gemessene oder auf einem anderen Wege erhaltene Drehzahl zum Zeitpunkt n dar.

Eine alternative Art und Weise zur Bestimmung der Phase r wird basierend auf folgender Gleichung durchgeführt:

$$r(n) = 2\pi \sum_{1}^{n} n\left(f \pm z(n)\right)/f_s,$$

wobei z(n) ein Wert für die Drehzahl zu einem Zeitpunkt n ist, wobei ein Zeitpunkt n gleich 1 der Startpunkt eines Analysefensters ist, und wobei $f_s$ eine Abtastrate ist, auf der das diskrete Vibrationssignal basiert, und wobei f die Drehzahl zu Beginn des Analysefensters ist.

Eine weitere Alternative zur Bestimmung der Phase r wird basierend auf folgender Gleichung durchgeführt:

$$r(n + \tau) = 2\pi \sum_{1}^{n} n\left(f \pm z(n + \tau)\right)/f_s,$$

wobei z(n) ein Wert für die Drehzahl zu einem Zeitpunkt n ist, wobei ein Zeitpunkt n gleich 1 der Startpunkt eines Analysefensters ist, wobei $f_s$ eine Abtastrate ist, auf der das diskrete Vibrationssignal basiert, und wobei $\tau$ ein Zeitverschiebungsparameter ist und wobei f die Drehzahl zu Beginn des Analysefensters ist.

Weitere Alternativen, die direkt oder indirekt auf dem Vibrationssignal basieren, können ebenfalls eingesetzt werden, um den Phasenterm zu bestimmen. So kann das Vibrationssignal selbst statt z(n) in der ersten der obigen drei Gleichungen oder in allen drei Gleichungen verwendet werden, oder aber eine von dem Vibrationssignal abgeleitete Drehzahl oder eine ansonsten gemessene oder geschätzte Drehzahl z(t) oder z(n).

Nach der Umsetzung der vorstehend dargestellten Maßnahmen steht eine dreidimensionale Analysefunktion entsprechend der Gleichung 8 und der Gleichung 1 zur Verfügung. Diese wird dann zur Analyse des Vibrationssignals x(t) bzw. x(n) entsprechend der Gleichungen 2 bis 5 verwendet, so dass als Ergebnis die dreidimensionale Zerlegung y(t, $\tau$, s) des Vibrationssignals x(t) für die weitere Interpretation zur Verfügung steht. Die Zerlegung y(t, $\tau$, s) kann theoretisch nach jeder drei Variablen integriert werden, so dass hier eine je nach Zielstellung ein- bis dreidimensionale Kreuzkorrelationsfunktion vorliegt. Es wird also für jedes Analysefenster eine eigene komplette Kreuzkorrelationsfunktion berechnet, die für jede der Mehrzahl von Analysefunktionen auch eine Mehrzahl von Korrelationsergebnissen aufweist.

Aus den theoretisch sieben möglichen Integrationen entlang einer, zwei oder drei Variablen der Zerlegung y(t, $\tau$, s) ergibt sich für eine bevorzugte praktische Analyse die sinnvolle Kombination, entlang der Zeit t mit den Parametern $\tau$ und $\upsilon$ bzw. s zu integrieren. Wegen der an sich geeigneten 3D-Darstellung bei zwei Parametern, die jedoch unübersichtlich werden kann, werden im Folgenden die Parameter getrennt für flächige Projektionen verwendet.

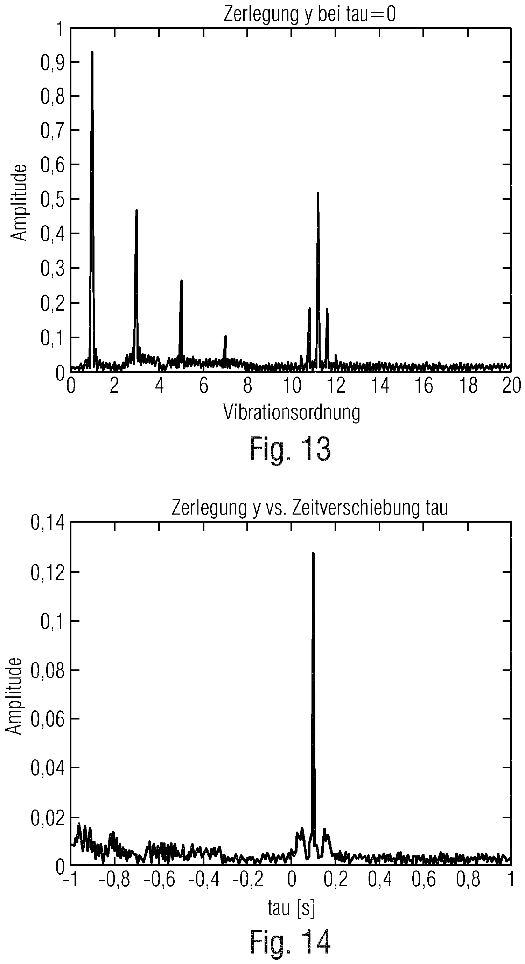

Die Fig. 13 zeigt die Projektion auf dem Skalierungsfaktor bzw. Ordnungsfaktor s bzw. auf die Frequenz *v* bei einer konstanten Zeitverschiebung, die hierbei beispielsweise als $\tau$ = 0 gewählt worden ist. In diesem Beispiel ist die Skalierung s identisch mit der Vibrationsordnung, so dass Fig. 13 das Ordnungsspektrum für das Zeitintervall t = 3 s bis t = 4 s zeigt. Fig. 13 zeigt somit bereits eine Kreuzkorrelationsfunktion, die in die Untersuchungseinrichtung 26 von Fig. 9 eingespeist werden kann, um auf der Basis der Kreuzkorrelationsfunktion eine Aussage über den Zustand des rotierenden Elements zu schaffen.

Dass bereits eine solche Ordnungsdarstellung vorliegt, liegt insbesondere daran, dass als Analysefrequenz die Drehzahl bereits relativ genau "getroffen" worden ist. Wird als Analysefrequenz jedoch die Drehzahl nicht genau "getroffen", so ist eine Umrechnung der Ordnungsfaktoren nötig, um von den Ordnungsfaktoren bei nicht genau getroffener Drehzahl auf ein Ordnungsdiagramm zu kommen, bei dem ein Ordnungsfaktor von 1 der Grundwelle der Drehzahl entspricht. Da die Zeitverschiebung der gemessenen gegen die wahre Drehfrequenz sowie gegen das Vibrationssignal unbekannt ist, ist die Abhängigkeit der Amplitude der Zerlegung y(t, $\tau$, s) von einer Zeitverschiebung $\tau$ ermittelbar. In Fig. 15a ist diese Abhängigkeit für die Ordnung von s = 11,2 dargestellt. Fig. 15a zeigt also die Abhängigkeit der Zerlegung y(t, $\tau$, s) von der unbekannten Zeitverschiebung $\tau$, wobei die Zeitverschiebung für die höchste Ordnung des Vibrationssignals von s = 11,2 bezüglich des Beispiels in Fig. 13 ermittelt worden ist. Es sei darauf hingewiesen, wie schmal die Abhängigkeit ist. Das Maximum liegt hierbei über wenige Millisekunden verteilt.

Fig. 15a zeigt ferner eine weitere Darstellung der Abhängigkeit der Zerlegung y(t, $\tau$, s) von der Anfangsfrequenz $v$ = s · f, wobei, in anderen Worten, die Abszisse in Fig. 15a die Ordnungszahl zeigt, wie in Fig. 13, und wobei der Zusammenhang zwischen der Ordnungszahl s durch $v/f$ gegeben ist. Aus Fig. 15a ist ersichtlich, dass alle Ordnungen bis auf die Ordnung 7 korrekt abgebildet sind. Daher wird es bevorzugt, für die eine Implementierung der vorliegenden Erfindung eine geeignete Kombination aus $\tau$ und $v$ zu bestimmen. Hierzu kann eine iterative Vorgehensweise eingesetzt werden, die durch die Steuerung 32 instruiert wird. Bei einem Ausführungsbeispiel der iterativen Vorgehensweise wird gemäß Fig. 16 vorgegangen. In einem Schritt 50 wird eine Berechnung der gewissermaßen vorläufigen Analysefunktionen durch die Analysefunktionseinrichtung vorgenommen, und zwar unter Verwendung einer vorläufigen (geschätzten) Zeitverschiebung. $\tau 0$, die beispielsweise null sein kann, wie es anhand von Fig. 13 bereits dargestellt worden ist.

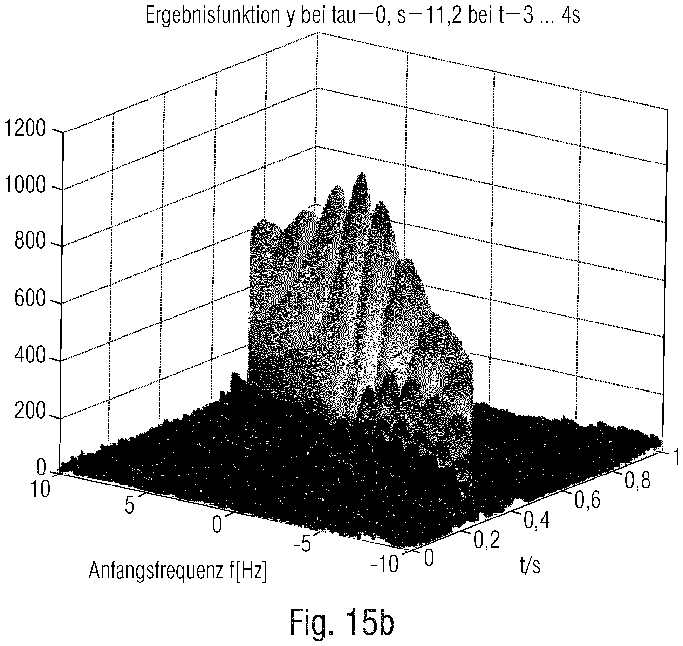

Fig. 15b zeigt eine zweidimensionale Korrelationsfunktion mit fester Zeitverschiebung, fester Ordnung und variabler Analysefrequenz pro Korrelationsergebnis. Insbesondere ist die Abhängigkeit der Zerlegung von der Anfangsfrequenz des Signals nach Fig. 3 oder Fig. 11 dargestellt. Die Zerlegung wurde für die Ordnung s = 11,2 berechnet. Es wird bevorzugt, eine geeignete Kombination von $\tau 0$, und s z. B. durch das Prozedere von Fig. 16 oder alternativ z. B. empirisch zu bestimmen.

In einem darauffolgenden Schritt 52 wird dann eine vorläufige Korrelationsfunktion berechnet, die beispielhaft in Fig. 13 dargestellt wird. Diese berechnete vorläufige Korrelationsfunktion wird durch die Korrelationseinrichtung 24 vorgenommen. Daraufhin wird in einem Schritt 24 ebenfalls vorzugsweise durch die Korrelationseinrichtung oder durch die Steuerung ein Korrektur-Ordnungsfaktor (K.-OF) berechnet, welcher beispielsweise der Ordnungsfaktor 11,2 ist. Vorzugsweise wird dieser Ordnungsfaktor als globales Maximum (außer beim Ordnungsfaktor 1) oder als lokales Maximum bestimmt. Dann wird, wie es in Schritt 56 dargestellt ist, eine Berechnung von Korrektur-Analysefunktionen $Af_1,.....Af_k$ vorgenommen, und zwar für k verschiedene Zeitverschiebungen, während jedoch nunmehr im Gegensatz zu der in Fig. 9 gezeigten Darstellung der Ordnungsfaktor auf den Korrektur-Ordnungsfaktor für alle Analysefunktionen festgelegt ist.

Daraufhin wird in einem Schritt 58 erneut durch die Korrelationseinrichtung 24 eine Korrektur-Korrelationsfunktion berechnet, die in Fig. 14 dargestellt ist, und die einen außerordentlich deutlichen Peak bei $\tau$ = 0,1 s zeigt. Der Zeitwert $\tau$ = 0,1 s wird in einem Schritt 60 durch die Korrelationseinrichtung 24 bestimmt, indem das Maximum der Korrelationsfunktion in Fig. 14 bestimmt wird.

Daraufhin wird, gewissermaßen in dem zweiten bzw. korrigierten Durchgang nunmehr eine Berechnung der Analysefunktionen $Af_1$ - $Af_n$ durch die Analysefunktionseinrichtung vorgenommen, jedoch mit der Korrektur-Zeitverschiebung, die im Schritt 60 bestimmt worden ist. Daraus ergibt sich eine genauere Korrelationsfunktion, die schmälere und ggf. höhere Spitzen haben wird als in Fig. 13 und somit die eine verbesserte Information für die Untersuchungseinrichtung 26 liefert, um den Zustand des rotierenden Elements zu beurteilen bzw. eine Aussage über diesen Zustand zu treffen.

Die durch die Gleichung 1 oder Gleichung 8 dargestellte Gruppe von Analysefunktionen, wobei die einzelnen Analysefunktionen durch einzelne gesetzte Ordnungsfaktoren erhalten werden, ist dreidimensional, da sie von den unabhängigen Variablen Zeit, Zeitverschiebung und Frequenz- bzw. Ordnungszahl abhängig ist. Vorzugweise wird für eine Ausführungsform der Vorrichtung zum Analysieren eines mit einer Drehzahl rotierenden Elements ein zweidimensionaler Raum von Variablen verwendet, und zwar über die Frequenzverschiebung bzw. den Skalierungsfaktor bzw. Ordnungsfaktor und über die Zeitverschiebung. Da es sich um Statistiken zweiter Ordnung handelt, wird ein globales Maximum eine optimale Kombination aus Zeit- und Frequenzverschiebung darstellen und ein Auffinden dieses Maximums könnte beispielsweise auf der Basis der in Fig. 16 gezeigten Ausführungsform durchgeführt werden.

Bei einem bevorzugten Ausführungsbeispiel, bei dem diskret in Analysefenstern vorgegangen wird, sind sowohl die Analysefunktionseinrichtung als auch die Korrelationseinrichtung ausgebildet, um Analysefenster nach Analysefenster zu verarbeiten, wobei ein Vorschub von einem Analysefenster zum nächsten je nach Implementierung eingestellt werden kann, dahin gehend, dass sich die Analysefenster teilweise überlappen oder nicht überlappen.

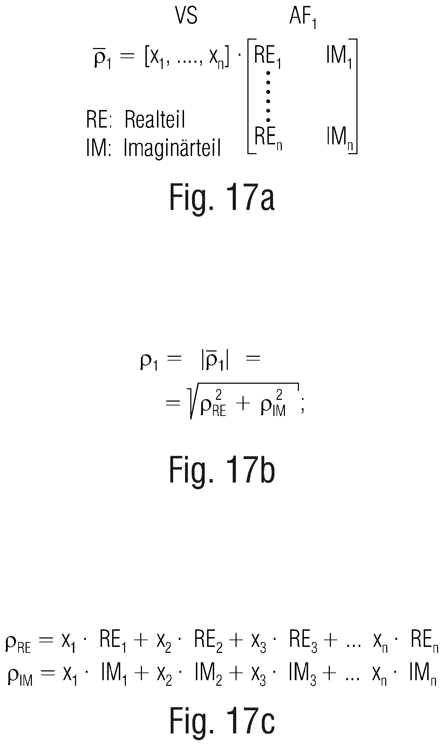

Darüber hinaus wird es, wie es Bezug nehmend auf Gleichung 3 dargestellt worden ist, bevorzugt, dass die Korrelationseinrichtung für jedes Analysefenster und für jede einzelne Analysefunktion Korrelationsergebnis KE berechnet, die insgesamt mit $\rho$ bezeichnet sind. Ein Korrelationsergebnis wird durch Berechnung eines Skalarprodukts aus dem Vibrationssignal VS und der Analysefunktion erhalten, und zwar für ein Analysefenster. Dies ist in Fig. 17a dargestellt. Da die Analysefunktion ein komplexes Signal ist, das sowohl einen Realteil als auch einen Imaginärteil hat, wird, wie es in Fig. 17c dargestellt ist, das Korrelationsergebnis zunächst einen Realteil $\rho_{RE}$ und einem Imaginärteil $\rho_{IM}$ haben. Das eigentliche Korrelationsergebnis für die erste Analysefunktion $Af_1$ wird dann als Betrag des komplexen Korrelationsergebnisses erhalten, wie es in Fig. 17b dargestellt ist, also durch jeweilige Quadrierung und Aufaddition des Realteils und des Imaginärteils des komplexen Skalarprodukts und anschließende Wurzelbildung.

Andere Berechnungen, die auf einer reellwertigen Darstellung der Analysefunktion basieren, können ebenfalls vorgenommen werden. Darüber hinaus können auch andere Berechnungen als die in Fig. 17a bis 17c vorgenommen werden, die zwar auf einer komplexen Analysefunktion basieren, jedoch das letztendliche Korrelationsergebnis, das ein reeller Wert ist, alternativ bestimmen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software oder zumindest teilweise in Hardware oder zumindest teilweise in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinen-lesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger oder das digitale Speichermedium oder das computerlesbare Medium sind typischerweise greifbar und/oder nicht flüchtig.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC oder beispielsweise ein Mikroprozessor, z. B. in Form einer ARM-Architektur.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung zur Analyse eines mit einer Drehzahl rotierenden Elements (10) auf der Basis eines Vibrationssignals, das von dem rotierenden Element (10) stammt, mit folgenden Merkmalen:

   einer Analysefunktionseinrichtung (22) zum Bilden einer Mehrzahl von Analysefunktionen (36), wobei die Analysefunktionseinrichtung (22) ausgebildet ist, um jede Analysefunktion auf der Basis einer Analysefrequenz (23), auf der Basis des Vibrationssignals (21) oder auf der Basis einer gemessenen oder geschätzten Drehzahl, und auf der Basis eines vorgegebenen Ordnungsfaktors (25) zu bilden, wobei der vorgegebene Ordnungsfaktor für jede Analysefunktion unterschiedlich ist;

   einer Korrelationseinrichtung (24) zum Berechnen einer Korrelationsfunktion (38), wobei die Korrelationseinrichtung (24) ausgebildet ist, um aus dem Vibrationssignal (21) und jeder Analysefunktion (36) ein Korrelationsergebnis zu berechnen, wobei jedes Korrelationsergebnis dem Ordnungsfaktor zugeordnet ist, auf dem die Analysefunktion basiert, mit der das Korrelationsergebnis berechnet worden ist, und wobei die Korrelationsergebnisse die Korrelationsfunktion darstellen; und

   einer Untersuchungseinrichtung (26) zum Untersuchen der Korrelationsfunktion (38) oder zum Untersuchen von der Korrelationsfunktion (38) abgeleiteten Informationen, um eine Aussage (40) über einen Zustand des rotierenden Elements (10) zu treffen, **dadurch gekennzeichnet, dass** die Analysefunktionseinrichtung (22) ausgebildet ist, um die Analysefunktionen $h(t, \tau, s)$ basierend auf der folgenden Gleichung zu berechnen:

$$h(t, \tau, s) = exp\big(j2\pi sft + jsr(t + \tau)\big),$$

   wobei t eine Zeitvariable ist, wobei $\tau$ eine Zeitverschiebung ist, wobei s die Ordnungsfaktoren für jede Analysefunktion darstellt, wobei f die Analysefrequenz ist, und wobei $r(t+\tau)$ ein Phasenterm ist, der von dem Vibrationssignal oder der Drehzahl abhängt, oder dass die Korrelationseinrichtung (24) ausgebildet ist, um eine vorläufige Korrelationsfunktion unter Verwendung einer vorläufigen Zeitverschiebung zwischen dem Vibrationssignal und der Mehrzahl von Analysefunktionen zu berechnen (50, 52), und um einen Korrektur-Ordnungsfaktor eines lokalen oder globalen Maximums der vorläufigen Korrelationsfunktion zu ermitteln (54), bei der die Analysefunktionseinrichtung (22) ausgebildet ist, um eine Mehrzahl von Korrektur-Analysefunktionen zu berechnen (56), die auf demselben Korrektur-Ordnungsfaktor basieren, und die eine unterschiedliche Zeitverschiebung haben, bei der die Korrelationseinrichtung (24) ausgebildet ist, um eine Korrektur-Korrelationsfunktion aus dem Vibrationssignal und der Mehrzahl von Korrektur-Analysefunktionen zu berechnen (58) und um die Korrektur-Korrelationsfunktion auszuwerten (60), um ein Maximum zu ermitteln, das einer Korrektur-Zeitverschiebung zugeordnet ist, bei der die Analysefunktionseinrichtung (22) ausgebildet ist, um unter Verwendung der Korrektur-Zeitverschiebung Korrektur-Analysefunktionen zu berechnen (62), und bei der die Korrelationseinrichtung (24) ausgebildet ist, um auf der Basis der Korrektur-Analysefunktionen, die auf der Korrektur-Zeitverschiebung basieren, die Korrelationsfunktion (38) zu berechnen (62).

**2.** Vorrichtung nach Anspruch 1,
bei der die Analysefunktionseinrichtung (22) ausgebildet ist, um die Analysefunktionen für ein Analysefenster zu bilden, das einen Startzeitpunkt und einen Endzeitpunkt aufweist,
wobei die Analysefunktionseinrichtung (22) ausgebildet ist, um die Mehrzahl von Analysefunktionen auf der Basis des Vibrationssignals (21) zwischen dem Startzeitpunkt und dem Endzeitpunkt zu bilden, und
bei der die Korrelationseinrichtung (24) ausgebildet ist, um jedes Korrelationsergebnis für das Analysefenster zu berechnen, um die Korrelationsfunktion für das Analysefenster zu erhalten.

**3.** Vorrichtung nach Anspruch 2, bei der die Analysefunktionseinrichtung (22) ausgebildet ist, um die Mehrzahl von Analysefunktionen mit diskreten Werten zu erzeugen,
bei der die Korrelationseinrichtung (24) ausgebildet ist, um unter Verwendung eines Signalvektors des Vibrationssignals (21), der ein diskretes Vibrationssignal in dem Analysefenster aufweist, und unter Verwendung der diskreten Analysefunktionen die Korrelationsergebnisse zu berechnen.

**4.** Vorrichtung nach einem der vorhergehenden Ansprüche,
bei der die Analysefunktionseinrichtung (22) ausgebildet ist, um als Analysefrequenz einen Schätzwert (23) für die Drehzahl zu verwenden, oder um eine für alle Analysefunktionen gleiche Analysefrequenz zu verwenden, oder
bei der die Analysefunktionseinrichtung (22) ausgebildet ist, um als Ordnungsfaktor nicht-ganzzahlige Ordnungsfaktoren oder nicht-ganzzahlige Ordnungsfaktoren und ganzzahlige Ordnungsfaktoren zu verwenden, oder
bei der die Analysefunktionseinrichtung (22) ausgebildet ist, um einen Ordnungsfaktor zu verwenden, der einen minimalen Wert kleiner als 1 hat, oder um einen Ordnungsfaktor zu verwenden, der einen maximalen Wert größer 10 hat, wobei zwischen dem kleinsten Wert des Ordnungsfaktors und dem größten Wert des Ordnungsfaktors Ordnungsfaktoren sind, die sich um ein Inkrement kleiner als 0,5 unterscheiden.

**5.** Vorrichtung nach Anspruch 3,
bei der die Analysefunktionseinrichtung (22) ausgebildet ist, um für jede Analysefunktion den zeitabhängigen Phasenterm zu berechnen, in dem eine Phase zu einem Zeitpunkt basierend auf folgender Gleichung berechnet wird:

$$r(n) = 2\pi \sum_{1}^{n} n\left(f \pm z(n)\right)/f_s$$

wobei $z(n)$ ein Wert für die Drehzahl zu einem Zeitpunkt $n$ ist, wobei ein Zeitpunkt $n$ gleich 1 der Startpunkt eines Analysefensters ist, und wobei $f_s$ eine Abtastrate ist, auf der das diskrete Vibrationssignal basiert, und wobei $f$ die Drehzahl zu Beginn des Analysefensters ist, oder
bei der die Analysefunktionseinrichtung (22) ausgebildet ist, um für jede Analysefunktion den zeitabhängigen Phasenterm zu berechnen, in dem eine Phase zu einem Zeitpunkt basierend auf folgender Gleichung berechnet wird:

$$r(n + \tau) = 2\pi \sum_{1}^{n} n\left(f \pm z(n + \tau)\right)/f_s$$

wobei $z(n)$ ein Wert für die Drehzahl zu einem Zeitpunkt $n$ ist, wobei ein Zeitpunkt $n$ gleich 1 der Startpunkt eines Analysefensters ist, wobei $f_s$ eine Abtastrate ist, auf der das diskrete Vibrationssignal basiert, und wobei $\tau$ die Zeitverschiebung ist und wobei $f$ die Drehzahl zu Beginn des Analysefensters ist.

**6.** Vorrichtung nach Anspruch 5,
bei der die Analysefunktionseinrichtung (22) ausgebildet ist, um den zeitabhängigen Phasenterm für jede Analysefunktion basierend auf einem Produkt aus $r(n)$ oder $r(n+\tau)$ und dem Ordnungsfaktor (s) zu berechnen.

**7.** Vorrichtung nach Anspruch 5 oder 6,
bei der die Analysefunktionseinrichtung ausgebildet ist, um ferner einen weiteren Phasenterm zu verwenden, der von dem Ordnungsfaktor abhängt, und der von dem Vibrationssignal in dem Analysefenster unabhängig ist.

**8.** Vorrichtung nach einem der vorhergehenden Ansprüche,
bei der die Untersuchungseinrichtung (26) ausgebildet ist, um die Korrelationsfunktion (38) oder eine von der Korrelationsfunktion abgeleitete Darstellung mit einer Referenz-Korrelationsfunktion oder einer Referenzdarstellung, die von der Referenz-Korrelationsfunktion abgeleitet ist, zu vergleichen, um bei einer Abweichung oberhalb einer absoluten oder relativen Schwelle die Aussage über den Zustand des rotierenden Elements zu treffen, wobei die Referenz-Korrelationsfunktion oder die Referenz-Darstellung von dem rotierenden Element zu einem früheren Zeitpunkt stammt, oder von einem Referenzelement für das rotierende Element stammt.

9. Vorrichtung nach einem der vorhergehenden Ansprüche,
bei der die Analysefunktionseinrichtung (22) und die Korrelationseinrichtung (24) ausgebildet sind, um für ein erstes Analysefenster eine erste Korrelationsfunktion zu berechnen, und um für ein zweites Analysefenster eine zweite Korrelationsfunktion zu berechnen, wobei das zweite Analysefenster zeitlich auf das erste Analysefenster folgt und mit dem ersten Analysefenster teilweise oder nicht überlappt.

10. Vorrichtung nach Anspruch 9,
bei der die Analysefunktionseinrichtung (22) ausgebildet ist, um für das erste Analysefenster eine geschätzte Drehzahl (23) zu Beginn des Analysefensters als Analysefrequenz zu verwenden, und um die Mehrzahl von Analysefunktionen für das erste Analysefenster unter Verwendung des Vibrationssignals in dem ersten Analysefenster zu berechnen,
bei der die Analysefunktionseinrichtung (22) ausgebildet ist, um für das zweite Analysefenster eine geschätzte Drehzahl zu Beginn des zweiten Analysefensters als Analysefrequenz zu verwenden, und um die Mehrzahl von Analysefunktionen für das zweite Analysefenster mit dem Vibrationssignal in dem zweiten Analysefenster zu berechnen.

11. Vorrichtung nach einem der vorhergehenden Ansprüche,
bei der die Analysefunktionseinrichtung (22) ausgebildet ist, um jede der Mehrzahl von Analysefunktionen als Analysefunktion zu liefern, die Realteildaten und Imaginärteildaten aufweist,
bei der die Korrelationseinrichtung (24) ausgebildet ist, um ein komplexes Skalarprodukt aus dem Vibrationssignal und der komplexen Analysefunktion zu bilden und
bei der die Korrelationseinrichtung (24) ausgebildet ist, um einen absoluten Betrag des komplexen Skalarprodukts als Korrelationsergebnis für die Analysefunktion zu berechnen.

12. Verfahren zur Analyse eines mit einer Drehzahl rotierenden Elements (10) auf der Basis eines Vibrationssignals, das von dem rotierenden Element (10) stammt, mit folgenden Merkmalen:

Bilden (22) einer Mehrzahl von Analysefunktionen (36), wobei die Analysefunktionseinrichtung (22) ausgebildet ist, um jede Analysefunktion auf der Basis einer Analysefrequenz (23), auf der Basis des Vibrationssignals (21) oder auf der Basis einer gemessenen oder geschätzten Drehzahl, und auf der Basis eines vorgegebenen Ordnungsfaktors (25) zu bilden, wobei der vorgegebene Ordnungsfaktor für jede Analysefunktion unterschiedlich ist;
Berechnen (24) einer Korrelationsfunktion (38), wobei die Korrelationseinrichtung (24) ausgebildet ist, um aus dem Vibrationssignal (21) und jeder Analysefunktion (36) ein Korrelationsergebnis zu berechnen, wobei jedes Korrelationsergebnis dem Ordnungsfaktor zugeordnet ist, auf dem die Analysefunktion basiert, mit der das Korrelationsergebnis berechnet worden ist, und wobei die Korrelationsergebnisse die Korrelationsfunktion darstellen; und
Untersuchen (26) der Korrelationsfunktion (38) oder zum Untersuchen von der Korrelationsfunktion (38) abgeleiteten Informationen, um eine Aussage (40) über einen Zustand des rotierenden Elements (10) zu treffen, **dadurch gekennzeichnet, dass** das Bilden (22) die Analysefunktionen $h(t, \tau, s)$ basierend auf der folgenden Gleichung berechnet:

$$h(t, \tau, s) = exp\big(j2\pi sft + jsr(t+\tau)\big),$$

wobei t eine Zeitvariable ist, wobei $\tau$ eine Zeitverschiebung ist, wobei s die Ordnungsfaktoren für jede Analysefunktion darstellt, wobei f die Analysefrequenz ist, und wobei $r(t+\tau)$ ein Phasenterm ist, der von dem Vibrationssignal oder der Drehzahl abhängt, oder dadurch, dass das Berechnen (24) eine vorläufige Korrelationsfunktion unter Verwendung einer vorläufigen Zeitverschiebung zwischen dem Vibrationssignal und der Mehrzahl von Analysefunktionen berechnet (50, 52), und einen Korrektur-Ordnungsfaktor eines lokalen oder globalen Maximums der vorläufigen Korrelationsfunktion ermittelt (54), bei dem das Bilden (22) eine Mehrzahl von Korrektur-Analysefunktionen berechnet (56), die auf demselben Korrektur-Ordnungsfaktor basieren, und die eine unterschiedliche Zeitverschiebung haben, bei dem das Berechnen (24) eine Korrektur-Korrelationsfunktion aus dem Vibrationssignal und der Mehrzahl von Korrektur-Analysefunktionen berechnet (58) und die Korrektur-Korrelationsfunktion auswertet (60), um ein Maximum zu ermitteln, das einer Korrektur-Zeitverschiebung zugeordnet ist, bei dem das Bilden (22) unter Verwendung der Korrektur-Zeitverschiebung Korrektur-Analysefunktionen berechnet (62), und bei dem das Berechnen (24) auf der Basis der Korrektur-Analysefunktionen, die auf der Korrektur-Zeitverschiebung basieren, die Korrelationsfunktion (38) berechnet (62).

13. Computerprogramm zum Durchführen des Verfahrens nach Anspruch 12, wenn das Computerprogramm auf einem Computer oder Prozessor abläuft.

## Claims

1. An apparatus for analyzing an element (10) rotating at a rotational speed based on a vibration signal originating from the rotating element (10), comprising:

    analysis function means (22) for forming a plurality of analysis functions (36), the analysis function means (22) being configured to form each analysis function based on an analysis frequency (23), based on the vibration signal (21) or based on a measured or estimated rotational speed and based on a predetermined order factor (25), the predetermined order factor differing for each analysis function;
    correlation means (24) for calculating a correlation function (38), the correlation means (24) being configured to calculate a correlation result from the vibration signal (21) and each analysis function (36), each correlation result being associated to the order factor which the analysis function, with which the correlation result was calculated, is based on, and the correlation results representing the correlation function; and
    examining means (26) for examining the correlation function (38) or for examining information derived from the correlation function (38) so as to make a statement (40) on a state of the rotating element (10),
    **characterized in that**
    the analysis function means (22) is configured to calculate the analysis functions $h(t, \tau, s)$ based on the following equation:

$$h(t, \tau, s) = exp\big(j2\pi sft + jsr(t + \tau)\big),$$

    t being a time variable, $\tau$ being a time shift, s representing the order factors for each analysis function, f being the analysis frequency and $r(t+\tau)$ being a phase term dependent on the vibration signal or the rotational speed, or **in that** the correlation means (24) is configured to calculate (50, 52) a preliminary correlation function using a preliminary time shift between the vibration signal and the plurality of analysis functions, establish (54) a correction order factor of a local or global maximum of the preliminary correlation function, wherein the analysis function means (22) is configured to calculate (56) a plurality of correction analysis functions which are based on the same correction order factor and which comprise a different time shift, wherein the correlation means (24) is configured to calculate (58) a correction correlation function from the vibration signal and the plurality of correction analysis functions and evaluate (60) the correction correlation function in order to establish a maximum associated to a correction time shift, wherein the analysis function means (22) is configured to calculate (62) correction analysis functions using the correction time shift, and wherein the correlation means (24) is configured to calculate (62) the correlation function (38) based on the correction analysis functions which are based on the correction time shift.

2. The apparatus in accordance with claim 1, wherein the analysis function means (22) is configured to form the analysis functions for an analysis window comprising a start time and an end time, wherein the analysis function means (22) is configured to form the plurality of analysis functions based on the vibration signal (21) between the start time and the end time, and wherein the correlation means (24) is configured to calculate each correlation result for the analysis window so as to obtain the correlation function for the analysis window.

3. The apparatus in accordance with claim 2, wherein the analysis function means (22) is configured to generate the plurality of analysis functions with discrete values,
wherein the correlation means (24) is configured to calculate the correlation results using a signal vector of the vibration signal (21) comprising a discrete vibration signal in the analysis window, and using the discrete analysis functions.

4.  The apparatus in accordance with any of the preceding claims,
wherein the analysis function means (22) is configured to use an estimated value (23) for the rotational speed as the analysis frequency or to use an analysis frequency equal for all the analysis functions, or
wherein the analysis function means (22) is configured to use non-integer order factors or non-integer order factors and integer order factors as the order factor, or wherein the analysis function means (22) is configured to use an order factor having a minimum value of smaller than 1, or to use an order factor having a maximum value of greater than 10, order factors differing by an increment of smaller than 0.5 being located between the smallest value of the order factor and the greatest value of the order factor.

5.  The apparatus in accordance with claim 3,
wherein the analysis function means (22) is configured to calculate the time-dependent phase term for each analysis function by calculating a phase at a time based on the following equation:

$$r(n) = 2\pi \sum_1^n n \left( f \pm z(n) \right)/f_s,$$

z(n) being a value for the rotational speed at a time n, a time n equaling 1 being the starting point of the analysis window, and $f_s$ being a sample rate which the discrete vibration signal is based on, and f being the rotational speed at the beginning of the analysis window, or
wherein the analysis function means (22) is configured to calculate the time-dependent phase term for each analysis function by calculating a phase at a time based on the following equation:

$$r(n + \tau) = 2\pi \sum_1^n n \left( f \pm z(n + \tau) \right)/f_s,$$

z(n) being a value for the rotational speed at a time n, a time n equaling 1 being the starting point of an analysis window, and $f_s$ being a sample rate which the discrete vibration signal is based on, and $\tau$ being the time shift, and f being the rotational speed at the beginning of the analysis window.

6.  The apparatus in accordance with claim 5,
wherein the analysis function means (22) is configured to calculate the time-dependent phase term for each analysis function based on a product of r(n) or r(n+$\tau$) and the order factor (s).

7.  The apparatus in accordance with claim 5 or 6,
wherein the analysis function means is configured to additionally use a further phase term which depends on the order factor and is not dependent on the vibration signal in the analysis window.

8.  The apparatus in accordance with any of the preceding claims,
wherein the examining means (26) is configured to compare the correlation function (38) or a representation derived from the correlation function to a reference correlation function or a reference representation derived from the reference correlation function in order to make the statement on the state of the rotating element with a deviation above an absolute or relative threshold, wherein the reference correlation function or the reference representation originates from the rotating element at an earlier time, or from a reference element for the rotating element.

9.  The apparatus in accordance with any of the preceding claims,
wherein the analysis function means (22) and the correlation means (24) are configured to calculate a first correlation function for a first analysis window and to calculate a second correlation function for a second analysis window, the second analysis window following in time after the first analysis window and partly overlapping or not overlapping the first analysis window.

10. The apparatus in accordance with claim 9,
wherein the analysis function means (22) is configured to use an estimated rotational speed (23) at the beginning of the analysis window as an analysis frequency for the first analysis window and to calculate the plurality of analysis functions for the first analysis window using the vibration signal in the first analysis window,
wherein the analysis function means (22) is configured to use an estimated rotational speed at the beginning of the second analysis window as an analysis frequency for the second analysis window and to calculate the plurality of analysis functions for the second analysis window with the vibration signal in the second analysis window.

11. The apparatus in accordance with any of the preceding claims,
wherein the analysis function means (22) is configured to provide each of the plurality of analysis functions as an analysis function comprising the real part data and imaginary part data,
wherein the correlation means (24) is configured to form a complex scalar product from the vibration signal and the complex analysis function, and
wherein the correlation means (24) is configured to calculate an absolute magnitude of the complex scalar product as a correlation result for the analysis function.

12. A method for analyzing an element (10) rotating at a rotational speed on the basis of a vibration signal originating from the rotating element (10), comprising:

forming (22) a plurality of analysis functions (36), the analysis function means (22) being configured to form each analysis function based on an analysis frequency (23), based on the vibration signal (21) or based on a measured or estimated rotational speed and based on a predetermined order factor (25), the predetermined order factor differing for each analysis function;
calculating (24) a correlation function (38), the correlation means (24) being configured to calculate a correlation result from the vibration signal (21) and each analysis function (36), each correlation result being associated to the order factor which the analysis function is based on with which the correlation result was calculated, and the correlation results representing the correlation function; and
examining (26) the correlation function (38) or for examining information derived from the correlation function (38) in order to make a statement (40) on a state of the rotating element (10),
**characterized in that**
forming (22) calculates the analysis functions $h(t,\tau,s)$ based on the following equation:

$$h(t, \tau, s) = exp\big(j2\pi sft + jsr(t + \tau)\big),$$

t being a time variable, $\tau$ being a time shift, s representing the order factors for each analysis function, f being the analysis frequency and r(t+$\tau$) being a phase term dependent on the vibration signal or the rotational speed, or **in that** calculating (24) calculates (50, 52) a preliminary correlation function using a preliminary time shift between the vibration signal and the plurality of analysis functions and establishes (54) a correction order factor of a local or global maximum of the preliminary correlation function, wherein forming (22) calculates (56) a plurality of correction analysis functions which are based on the same correction order factor and which comprise a different time shift, wherein calculating (24) calculates (58) a correction correlation function from the vibration signal and the plurality of correction analysis functions and evaluates (60) the correction correlation function in order to establish a maximum associated to a correction time shift, wherein forming (22) calculates (62) correction analysis functions using the correction time shift, and wherein calculating (24) calculates (62) the correlation function (38) based on the correction analysis functions which are based on the correction time shift.

13. A computer program for performing the method in accordance with claim 12 when the computer program runs on a computer or processor.

**Revendications**

1. Dispositif d'analyse d'un élément (10) tournant à un nombre de tours sur base d'un signal de vibration provenant de l'élément rotatif (10), aux caractéristiques suivantes :

un dispositif de fonctions d'analyse (22) destiné à former une pluralité de fonctions d'analyse (36), où le dispositif de fonctions d'analyse (22) est conçu pour former chaque fonction d'analyse sur base d'une fréquence d'analyse (23), sur base du signal de vibration (21) ou sur base d'un nombre de tours mesuré ou estimé, et sur base d'un facteur d'ordre prédéterminé (25), où le facteur d'ordre prédéterminé est différent pour chaque fonction d'analyse; un dispositif de corrélation (24) destiné à calculer une fonction de corrélation (38), où le dispositif de corrélation (24) est conçu pour calculer un résultat de corrélation à partir du signal de vibration (21) et de chaque fonction d'analyse (36), où chaque résultat de corrélation est attribué au facteur d'ordre sur lequel se base la fonction d'analyse par laquelle a été calculé le résultat de corrélation, et où les résultats de corrélation représentent la fonction de corrélation; et

un dispositif d'examen (26) destiné à examiner la fonction de corrélation (38) ou à examiner les informations dérivées de la fonction de corrélation (38) pour tirer une conclusion (40) sur un état de l'élément rotatif (10), **caractérisé par le fait que** le dispositif de fonctions d'analyse (22) est conçu pour calculer les fonctions d'analyse $h(t, \tau, s)$ sur base de l'équation suivante:

$$h(t, \tau, s) = exp\big(j2\pi sft + jsr(t + \tau)\big),$$

où t est une variable de temps, où $\tau$ est un décalage dans le temps, où s représente les facteurs d'ordre pour chaque fonction d'analyse, où f est la fréquence d'analyse, et où r (t + t) est un terme de phase qui dépend du signal de vibration ou du nombre de tours, ou

**par le fait que** le dispositif de corrélation (24) est conçu pour calculer (50, 52) une fonction de corrélation provisoire à l'aide d'un décalage dans le temps provisoire entre le signal de vibration et la pluralité de fonctions d'analyse, et pour déterminer (54) un facteur d'ordre de correction d'un maximum local ou global de la fonction de corrélation provisoire, où le dispositif de fonctions d'analyse (22) est conçu pour calculer (56) une pluralité de fonctions d'analyse de correction qui se basent sur le même facteur d'ordre de correction et qui présentent un décalage dans le temps différent, où le dispositif de corrélation (24) est conçu pour calculer (58) une fonction de corrélation de correction à partir du signal de vibration et de la pluralité de fonctions d'analyse de correction et pour évaluer (60) la fonction de corrélation de correction, pour déterminer un maximum qui est associé à un décalage dans le temps de correction, où le dispositif de fonctions d'analyse (22) est conçu pour calculer (62) les fonctions d'analyse de correction à l'aide du décalage dans le temps de correction, et où le dispositif de corrélation (24) est conçu pour calculer (62) la fonction de corrélation (38) sur base des fonctions d'analyse de correction qui sont basées sur le décalage dans le temps de correction.

2. Dispositif selon la revendication 1,
dans lequel le dispositif de fonctions d'analyse (22) est conçu pour former les fonctions d'analyse pour une fenêtre d'analyse qui présente un moment de début et un moment de fin,
dans lequel le dispositif de fonctions d'analyse (22) est conçu pour former la pluralité de fonctions d'analyse sur base du signal de vibration (21) entre le moment de début et le moment de fin, et dans lequel le dispositif de corrélation (24) est conçu pour calculer chaque résultat de corrélation pour la fenêtre d'analyse pour obtenir la fonction de corrélation pour la fenêtre d'analyse.

3. Dispositif selon la revendication 2, dans lequel le dispositif de fonctions d'analyse (22) est conçu pour générer la pluralité de fonctions d'analyse à valeurs discrètes,
dans lequel le dispositif de corrélation (24) est conçu pour calculer les résultats de corrélation à l'aide d'un vecteur de signal du signal de vibration (21) qui présente un signal de vibration discret dans la fenêtre d'analyse, et à l'aide des fonctions d'analyse discrètes.

4. Dispositif selon l'une des revendications précédentes,
dans lequel le dispositif de fonctions d'analyse (22) est conçu pour utiliser, comme fréquence d'analyse, une valeur estimée (23) du nombre de tours, ou pour utiliser une fréquence d'analyse qui est identique pour toutes les fonctions d'analyse, ou
dans lequel le dispositif de fonctions d'analyse (22) est conçu pour utiliser, comme facteur d'ordre, des facteurs d'ordre non de nombre entier ou des facteurs d'ordre non de nombre entier et des facteurs d'ordre de nombre entier, ou
dans lequel le dispositif de fonctions d'analyse (22) est conçu pour utiliser un facteur d'ordre qui a une valeur minimale inférieure à 1 ou pour utiliser un facteur d'ordre qui a une valeur maximale supérieure à 10, où entre la valeur la plus petite du facteur d'ordre et la valeur la plus grande du facteur d'ordre existent des facteurs d'ordre qui diffèrent d'un incrément de moins de 0,5.

5. Dispositif selon la revendication 3,
dans lequel le dispositif de fonctions d'analyse (22) est conçu pour calculer, pour chaque fonction d'analyse, le terme de phase fonction du temps, où une phase à un moment donné est calculée sur base de l'équation suivante:

$$r(n) = 2\pi \sum_{1}^{n} n \left( f \pm z(n) \right)/f_s$$

où z(n) est une valeur du nombre de tours à un moment n, où un moment n égal à 1 est le point de départ d'une fenêtre d'analyse, et où $f_s$ est un taux de balayage sur lequel se base le signal de vibration discret, et où f est le nombre de tours au début de la fenêtre d'analyse, ou
dans lequel le dispositif de fonctions d'analyse (22) est conçu pour calculer le terme de phase fonction du temps pour chaque fonction d'analyse, où une phase à un moment donné est calculée sur base de l'équation suivante:

$$r(n + \tau) = 2\pi \sum_{1}^{n} n \left( f \pm z(n + \tau) \right)/f_s$$

où z(n) est une valeur du nombre de tours à un moment n, où un moment n égal à 1 est le point de départ d'une fenêtre d'analyse, où $f_s$ est un taux de balayage sur lequel se base le signal de vibration discret, et où $\tau$ est le décalage dans le temps et où f est le nombre de tours au début de la fenêtre d'analyse.

6. Dispositif selon la revendication 5,
   dans lequel le dispositif de fonctions d'analyse (22) est conçu pour calculer le terme de phase fonction du temps pour chaque fonction d'analyse sur base d'un produit de r(n) ou r(n+$\tau$) et du facteur d'ordre (s).

7. Dispositif selon la revendication 5 ou 6,
   dans lequel le dispositif de fonctions d'analyse est conçu pour utiliser par ailleurs un autre terme de phase qui dépend du facteur d'ordre et qui est indépendant du signal de vibration dans la fenêtre d'analyse.

8. Dispositif selon l'une des revendications précédentes,
   dans lequel le dispositif d'examen (26) est conçu pour comparer la fonction de corrélation (38) ou une représentation dérivée de la fonction de corrélation avec une fonction de corrélation de référence ou une représentation de référence qui est dérivée de la fonction de corrélation de référence pour tirer, en cas d'écart au-dessus d'un seuil absolu ou relatif, une conclusion sur l'état de l'élément rotatif, dans lequel la fonction de corrélation de référence ou la représentation de référence provient de l'élément rotatif à un moment antérieur, ou provient d'un élément de référence pour l'élément rotatif.

9. Dispositif selon l'une des revendications précédentes,
   dans lequel le dispositif de fonctions d'analyse (22) et le dispositif de corrélation (24) sont conçus pour calculer une première fonction de corrélation pour une première fenêtre d'analyse et pour calculer une deuxième fonction de corrélation pour une deuxième fenêtre d'analyse, où la deuxième fenêtre d'analyse suit la première fenêtre d'analyse dans le temps et vient ou non partiellement en chevauchement avec la première fenêtre d'analyse.

10. Dispositif selon la revendication 9,
    dans lequel le dispositif de fonctions d'analyse (22) est conçu pour utiliser, comme fréquence d'analyse pour la première fenêtre d'analyse, un nombre de tours estimé (23) au début de la fenêtre d'analyse, et pour calculer la pluralité de fonctions d'analyse pour la première fenêtre d'analyse à l'aide du signal de vibration dans la première fenêtre d'analyse,
    dans lequel le dispositif de fonctions d'analyse (22) est conçu pour utiliser, comme fréquence d'analyse pour la deuxième fenêtre d'analyse, un nombre de tours estimé au début de la deuxième fenêtre d'analyse et pour calculer la pluralité de fonctions d'analyse pour la deuxième fenêtre d'analyse avec le signal de vibration dans la deuxième fenêtre d'analyse.

11. Dispositif selon l'une des revendications précédentes,
    dans lequel le dispositif de fonctions d'analyse (22) est conçu pour fournir, comme fonction d'analyse, chacune de la pluralité de fonctions d'analyse qui présente des données de partie réelle et des données de partie imaginaire,
    dans lequel le dispositif de corrélation (24) est conçu pour former un produit scalaire complexe à partir du signal de vibration et de la fonction d'analyse complexe, et

dans lequel le dispositif de corrélation (24) est conçu pour calculer une quantité absolue du produit scalaire complexe comme résultat de corrélation pour la fonction d'analyse.

12. Procédé d'analyse d'un élément (10) tournant à un nombre de tours sur base d'un signal de vibration provenant de l'élément rotatif (10), aux caractéristiques suivantes consistant à:

former (22) une pluralité de fonctions d'analyse (36), où le dispositif de fonctions d'analyse (22) est conçu pour former chaque fonction d'analyse sur base d'une fréquence d'analyse (23), sur base du signal de vibration (21) ou sur base d'un nombre de tours mesuré ou estimé et sur base d'un facteur d'ordre prédéterminé (25), où le facteur d'ordre prédéterminé est différent pour chaque fonction d'analyse;

calculer (24) une fonction de corrélation (38), où le dispositif de corrélation (24) est conçu pour calculer un résultat de corrélation à partir du signal de vibration (21) et de chaque fonction d'analyse (36), où chaque résultat de corrélation est associé au facteur d'ordre sur lequel se base la fonction d'analyse par laquelle a été calculé le résultat de corrélation, et où les résultats de corrélation représentent la fonction de corrélation; et

examiner (26) la fonction de corrélation (38) ou examiner les informations dérivées de la fonction de corrélation (38), pour tirer une conclusion (40) sur un état de l'élément rotatif (10),

**caractérisé par le fait que**

la formation (22) calcule les fonctions d'analyse $h(t,\tau,s)$ sur base de l'équation suivante:

$$h(t,\tau,s) = exp\big(j2\pi sft + jsr(t+\tau)\big),$$

où t est une variable de temps, où $\tau$ est un décalage dans le temps, où s représente les facteurs d'ordre pour chaque fonction d'analyse, où f est la fréquence d'analyse, et où $r(t+\tau)$ est un terme de phase qui dépend du signal de vibration ou du nombre de tours, ou

**par le fait que** le calcul (24) calcule (50, 52) une fonction de corrélation provisoire à l'aide d'un décalage dans le temps provisoire entre le signal de vibration et la pluralité de fonctions d'analyse, et détermine (54) un facteur d'ordre de correction d'un maximum local ou global de la fonction de corrélation provisoire, où la formation (22) calcule (56) une pluralité de fonctions d'analyse de correction qui se basent sur le même facteur d'ordre de correction et qui présentent un décalage dans le temps différent, où le calcul (24) calcule (58) une fonction de corrélation de correction à partir du signal de vibration et de la pluralité de fonctions d'analyse de correction et évalue (60) la fonction de corrélation de correction pour déterminer un maximum qui est associé à un décalage dans le temps de correction, où la formation (22) calcule (62) les fonctions d'analyse de correction à l'aide du décalage dans le temps de correction, et où le calcul (24) calcule (62), sur base des fonctions d'analyse de correction qui se basent sur le décalage dans le temps de correction, la fonction de corrélation (38).

13. Programme d'ordinateur pour mettre en œuvre le procédé selon la revendication 12 lorsque le programme d'ordinateur est exécuté sur un ordinateur ou un processeur.

Fig. 1

Fig. 2

Fig. 3

Fig. 4

Fig. 5

Fig. 6

EP 3 571 487 B1

Fig. 7

Fig. 8

Vibrationssensor/Speicher ⌐~28

Vibrationssignal von rotierendem    27
Element mit zeitlich variabler Drehzahl    z(n)    30

22    23    Drehzahlbestimmer

21⌐    25    gemeinsame Analysefrequenz
(z.B. geschätzte Drehzahl)

Analysefunktionseinrichtung

vorgegebene Ordnungsfaktoren $s_1, s_2, ... , s_n$
$AF_1$    $AF_2$    . . .    $AF_n$    ⌐36    (z.B. von 0,01 bis 100
$(s_1)$    $(s_2)$    $(s_n)$    in 0,001 Inkrementen)
$n > 100$  (z.B. 99,990)

Korrelationseinrichtung ⌐~24

⌐38
Korrelationsfunktion $KE(s_1), KE(s_2), ...., KE(s_n)$
(besteht z.B. aus 99,990 Werten)
Steuerung
(Iteration, Fenster, ...)

32    40

Untersuchungseinrichtung
34    Aussage über den Zustand
des rotierenden Elements
(z.B. defekt, in Ordnung,
26    Warnsignal, Steuersignal
Speicher für Referenzdaten    an rotierendes Element, ...)
für das rotierende Element

Fig. 9

$$h(t, \tau, s) = \exp[j\, 2\pi\, s\, f\, t + j\, s\, r\, (t + \tau)]$$

41

42

1. Term $\quad 2 \cdot \pi \cdot s\, f\, t$

$\quad$ s: $\quad$ Ordnungsfaktor
$\quad$ f: $\quad$ Analysefrequenz

2. Term $\quad s \cdot r\, (t + \tau)$

$\quad$ $r\,(t + \tau)$: $\quad$ zeitlich variable Phase
$\quad$ $\tau$: $\quad$ Zeitverschiebung (kann auch 0 sein)

<u>diskret</u> für ein Analysefenster: $n = 1 \ldots N$

$$h(n, \tau, s) = \exp[j\, 2\pi\, s\, f\, n + j\, s\, r\, (n + \tau)]$$

$$s \cdot r(n + \tau) = s \cdot 2\pi \sum_{1}^{n} x\,(n)\, /\, f_s$$

$\quad$ $f_s$: $\quad$ Abtastfrequenz für Vibrationssignal
$\quad$ $x\,(n)$: $\quad$ Abtestwert des Vibrationssignals für Zeitpunkt n
$\qquad\qquad$ im Analysefenster

# Fig. 10

Fig. 11

wahre und gemessene Drehfrequenz, Zeitverzögerung 0,1s

Fig. 12

Fig. 13

Fig. 14

Fig. 15a

Ergebnisfunktion y bei tau=0, s=11,2 bei t=3 ... 4s

Fig. 15b

Berechne vorläufigen $AF_1$ ... $AF_n$ u.V.
einer vorläufigen Zeitverschiebung — 50

Berechne vorläufige Korrelationsfunktion — 52

Bestimme einen Korrektur-Ordnungsfaktor
(K.-OF) — 54

Berechne Korrektur $AF_1$ ..... $AF_k$
für k verschiedene Zeitverschiebungen
bei festem K.-OF — 56

Berechne Korrektur-Korrelationsfunktion
(Fig. 14) — 58

Bestimme Korrektur-Zeitverschiebung
bei Maximum
(Fig. 14) — 60

Berechne $AF_1$ ..... $AF_n$ mit der Korrektur-Zeitverschiebung
und daraus die (korrigierte) Korrelationsfunktion — 62

Fig. 16

$$\overset{VS}{\overline{\rho}_1} = [x_1, \ldots, x_n] \cdot \overset{AF_1}{\begin{bmatrix} RE_1 & IM_1 \\ \vdots & \\ RE_n & IM_n \end{bmatrix}}$$

RE: Realteil
IM: Imaginärteil

## Fig. 17a

$$\rho_1 = |\overline{\rho}_1| = \\ = \sqrt{\rho_{RE}^2 + \rho_{IM}^2} \, ;$$

## Fig. 17b

$$\rho_{RE} = x_1 \cdot RE_1 + x_2 \cdot RE_2 + x_3 \cdot RE_3 + \ldots x_n \cdot RE_n$$
$$\rho_{IM} = x_1 \cdot IM_1 + x_2 \cdot IM_2 + x_3 \cdot IM_3 + \ldots x_n \cdot IM_n$$

## Fig. 17c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2730906 A2
- DE 19954066 C1
- CN 105806613 A
- CN 106289774 A